# EUROPEAN PATENT APPLICATION

(11) **EP 4 060 986 A1**
(43) Date of publication of application: **21.09.2022**
(21) Application number: 19953436.3
(22) Date of filing: 20.11.2019
(51) Int. Cl.: H04N 9/04

(54) **IMAGE SENSOR, CONTROL METHOD, CAMERA ASSEMBLY, AND MOBILE TERMINAL**

(71) Applicant: GUANGDONG OPPO MOBILE TELECOMMUNICATIONS CORP., LTD., Dongguan, Guangdong 523860 (CN)
(72) Inventor: TANG, Cheng, Dongguan, Guangdong 523860 (CN); ZHANG, Gong, Dongguan, Guangdong 523860 (CN); ZHANG, Haiyu, Dongguan, Guangdong 523860 (CN); YANG, Xin, Dongguan, Guangdong 523860 (CN); XU, Rui, Dongguan, Guangdong 523860 (CN); WANG, Wentao, Dongguan, Guangdong 523860 (CN); LAN, He, Dongguan, Guangdong 523860 (CN); SUN, Jianbo, Dongguan, Guangdong 523860 (CN); LI, Xiaotao, Dongguan, Guangdong 523860 (CN)
(74) Representative: Ipside
(86) International application number: PCT/CN2019/119673
(87) International publication number: WO 2021/097701

(57) **Abstract**

An image sensor (10), a control method, a camera assembly (40), and a mobile terminal (90). The image sensor (10) comprises a two-dimensional pixel array (11) and a lens array (17). The two-dimensional pixel array (11) comprises multiple color pixels and multiple panchromatic pixels. The two-dimensional pixel array (11) comprises multiple sub-units, and each sub-unit comprises multiple single-color pixels and the multiple panchromatic pixels. The lens array (17) comprises multiple lenses (170), and each lens (170) covers multiple pixels (101) in at least one sub-unit.

## Description

### TECHNICAL FIELD

The present disclosure relates to the field of imaging technologies, and in particular to an image sensor, a control method, a camera assembly, and a mobile terminal.

### BACKGROUND

In the related art, there are usually two ways to achieve phase focusing: (1) multiple pairs of phase detection pixels are arranged in a pixel array to detect a phase difference, each pair of phase detection pixels including one pixel with the left half blocked and one pixel with the right half blocked; (2) each pixel includes two photodiodes, and the two photodiodes form a phase detection pixel to detect the phase difference.

### SUMMARY OF THE DISCLOSURE

The present disclosure provides an image sensor, a control method, a camera assembly, and a mobile terminal.

The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units.

The control method is applied to an image sensor. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units. The method includes: outputting panchromatic pixel information by exposing the plurality of panchromatic pixels; performing focusing by calculating phase difference information according to the panchromatic pixel information; and in an in-focus state, obtaining a target image by exposing the plurality of pixels in the two-dimensional pixel array.

The control method is applied to an image sensor. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units. The method includes: outputting panchromatic pixel information by exposing the plurality of panchromatic pixels, and outputting color pixel information by exposing the plurality of color pixels; performing focusing by calculating phase difference information according to the panchromatic pixel information and the color pixel information; and in an in-focus state, obtaining a target image by exposing the plurality of pixels in the two-dimensional pixel array.

The camera assembly includes an image sensor. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units.

The camera assembly includes an image sensor and a processing chip. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units. The plurality of the panchromatic pixels in the image sensor are exposed to output panchromatic pixel information. The processing chip is configured to perform focusing by calculating phase difference information according to the panchromatic pixel information; wherein in an in-focus state, the plurality of pixels in the two-dimensional pixel array are exposed to obtain a target image.

The camera assembly includes an image sensor and a processing chip. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units. The plurality of panchromatic pixels in the image sensor are exposed to output panchromatic pixel information, and the plurality of color pixels in the image sensor are exposed to output color pixel information. The processing chip is configured to perform focusing by calculating phase difference information according to the panchromatic pixel information and the color pixel information; wherein in an in-focus state, the plurality of pixels in the two-dimensional pixel array are exposed to obtain a target image.

The mobile terminal includes a casing and an image sensor arranged in the casing. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units.

The mobile terminal includes an image sensor and a processor. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units. The plurality of the panchromatic pixels in the image sensor are exposed to output panchromatic pixel information. The processor is configured to perform focusing by calculating phase difference information according to the panchromatic pixel information; wherein in an in-focus state, the plurality of pixels in the two-dimensional pixel array are exposed to obtain a target image.

The mobile terminal includes an image sensor and a processor. The image sensor includes a two-dimensional pixel array and a lens array. The two-dimensional pixel array includes a plurality of color pixels and a plurality of panchromatic pixels; wherein each color pixel has a narrower spectral response than each panchromatic pixel; the two-dimensional pixel array includes a plurality of sub-units, and each sub-unit includes a plurality of single-color pixels and some of the plurality of panchromatic pixels. The lens array includes a plurality of lenses; wherein each lens covers a plurality of pixels in at least one of the plurality of sub-units. The plurality of panchromatic pixels in the image sensor are exposed to output panchromatic pixel information, and the plurality of color pixels in the image sensor are exposed to output color pixel information. The processor is configured to perform focusing by calculating phase difference information according to the panchromatic pixel information and the color pixel information; wherein in an in-focus state, the plurality of pixels in the two-dimensional pixel array are exposed to obtain a target image.

Additional aspects and advantages of embodiments of the present disclosure will be given in part in the following description and will become apparent in part from the following description, or from the practice of the present disclosure.

### BRIEF DESCRIPTION OF THE DRAWINGS

FIG. 1 is a schematic view of an image sensor according to some embodiments of the present disclosure.
FIG. 2 is a schematic view of an image sensor according to some embodiments of the present disclosure.
FIG. 3 is a schematic view of a pixel circuit according to some embodiments of the present disclosure.
FIGS. 4-17 are schematic views of a pixel arrangement and a lens coverage of a smallest repeating unit according to some embodiments of the present disclosure.
FIG. 18 is a schematic view of a two-dimensional pixel array and a connection mode of an exposure control line according to some embodiments of the present disclosure.
FIG. 19 is a flowchart of a control method according to some embodiments of the present disclosure.
FIG. 20 is a schematic view of a camera assembly according to some embodiments of the present disclosure.
FIG. 21 is a schematic view of exposure saturation time for different color channels.
FIG. 22 is a flowchart of a control method according to some embodiments of the present disclosure.
FIGS. 23 and 24 are schematic views of a principle of a control method according to some embodiments of the present disclosure.
FIGS. 25-30 are flowcharts of a control method according to some embodiments of the present disclosure.
FIGS. 31-34 are schematic views of a principle of a control method according to some embodiments of the present disclosure.
FIG. 35 is a schematic view of a mobile terminal according to some embodiments of the present disclosure.

### DETAILED DESCRIPTION

The embodiments of the present disclosure are described in detail below. Examples in the embodiments are shown in the accompanying drawings, in which same or similar reference numerals indicate same or similar elements or elements with same or similar functions throughout. The following embodiments described with reference to the drawings are exemplary, are only intended to explain the present disclosure, and cannot be understood as a limitation to the present disclosure.

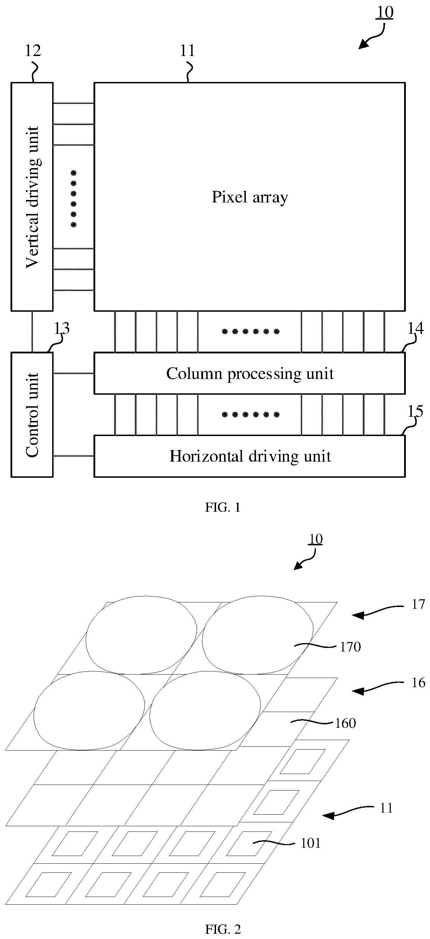

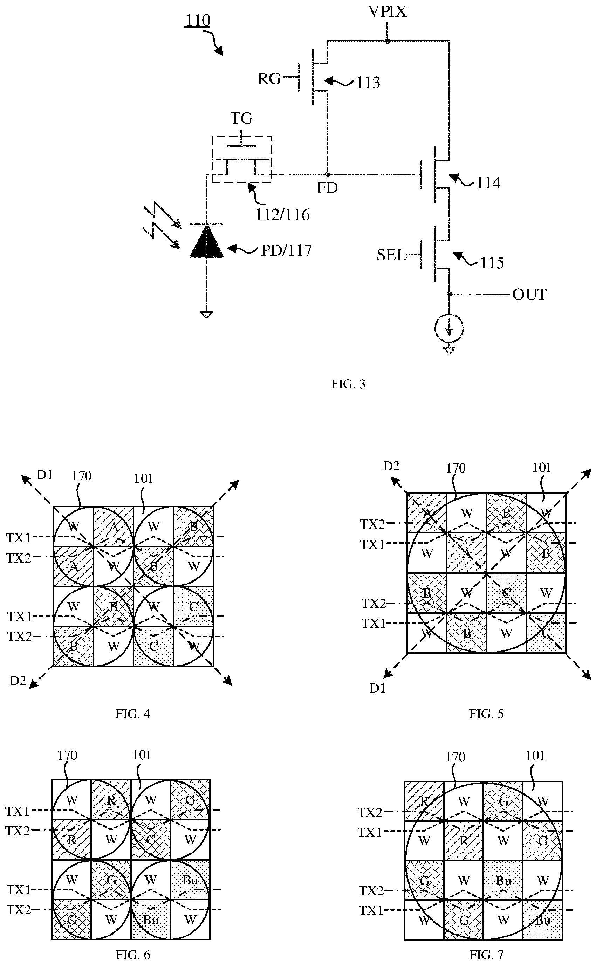

Referring to FIG. 2 and FIG. 4. The present disclosure provides an image sensor 10. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit.

Referring to FIG. 2 and FIG. 4, the present disclosure further provides a control method. The control method may be applied to an image sensor 10. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit. The control method includes: exposing the plurality of panchromatic pixels to output panchromatic pixel information; calculating phase difference information according to the panchromatic pixel information for focusing; in an in-focus state, exposing the plurality of pixels 101 in the two-dimensional pixel array 11 to obtain a target image.

Referring to FIG. 2, FIG. 4 and FIG. 20, the present disclosure provides a camera assembly 40. The camera assembly 40 includes an image sensor 10. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit.

Referring to FIG. 2, FIG. 4 and FIG. 20. The present disclosure further provides a camera assembly 40. The camera assembly 40 includes an image sensor 10 and a processing chip 20. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit. The plurality of panchromatic pixels in the image sensor 10 are exposed to output panchromatic pixel information. The processing chip 20 is configured to calculate phase difference information according to the panchromatic pixel information for focusing. In an in-focus state, the plurality of pixels 101 in the two-dimensional pixel array 11 are exposed to obtain a target image.

Referring to FIG. 2, FIG. 4 and FIG. 20, the present disclosure further provides a camera assembly 40. The camera assembly 40 includes an image sensor 10 and a processing chip 20. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit. The plurality of panchromatic pixels in the image sensor 10 are exposed to output panchromatic pixel information, and the plurality of color pixels are exposed to output color pixel information. The processing chip 20 is configured to calculate phase difference information according to the panchromatic pixel information and the color pixel information for focusing. In an in-focus state, the plurality of pixels 101 in the two-dimensional pixel array 11 are exposed to obtain a target image.

Referring to FIG. 2, FIG. 4, and FIG. 35, the present disclosure further provides a mobile terminal 90. The mobile terminal 90 includes a casing 80 and an image sensor 10. The image sensor 10 is arranged in the casing 80. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit.

Referring to FIG. 2, FIG. 4, and FIG. 35, the present disclosure further provides a mobile terminal 90. The mobile terminal 90 includes an image sensor 10 and a processor 60. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit. The plurality of panchromatic pixels in the image sensor 10 are exposed to output panchromatic pixel information. The processor 60 is configured to calculate phase difference information according to the panchromatic pixel information for focusing. In an in-focus state, the plurality of pixels 101 in the two-dimensional pixel array 11 are exposed to obtain a target image.

Referring to FIG. 2, FIG. 4, and FIG. 35, the present disclosure further provides a mobile terminal 90. The mobile terminal 90 includes an image sensor 10 and a processor 60. The image sensor 10 includes a two-dimensional pixel array 11 and a lens array 17. The two-dimensional pixel array 11 includes a plurality of color pixels and a plurality of panchromatic pixels, and the color pixels have a narrower spectral response than the panchromatic pixels. The two-dimensional pixel array 11 includes a plurality of sub-units, and each sub-unit includes a plurality of single-color pixels and some of the panchromatic pixels. The lens array 17 includes a plurality of lenses 170, and each lens 170 covers a plurality of pixels 101 in at least one sub-unit. The plurality of panchromatic pixels in the image sensor 10 are exposed to output panchromatic pixel information, and the plurality of color pixels are exposed to output color pixel information. The processor 60 is configured to calculate phase difference information according to the panchromatic pixel information and the color pixel information for focusing. In an in-focus state, the plurality of pixels 101 in the two-dimensional pixel array 11 are exposed to obtain a target image.

In the related art, phase focusing is usually implemented based on an RGB array of pixels, but this phase focusing method has low scene adaptability. Specifically, in a high-brightness environment, the R, G, and B pixels can receive more light and output pixel information with high signal-to-noise ratio, and the accuracy of phase focusing is high; while in a low-brightness environment, the R, G, and B pixels can receive less light, the signal-to-noise ratio of the output pixel information is low, and the accuracy of phase focusing is also low.

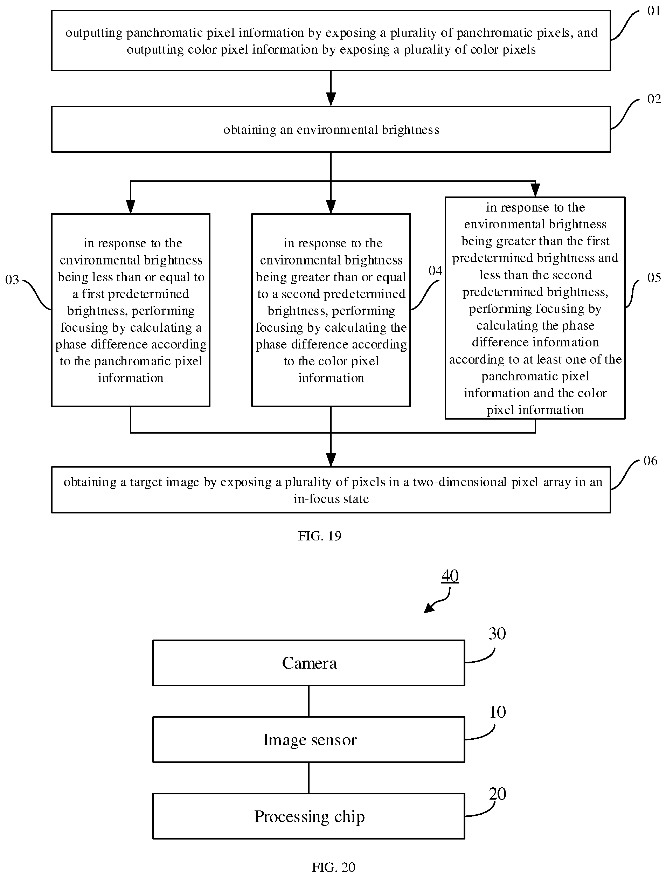

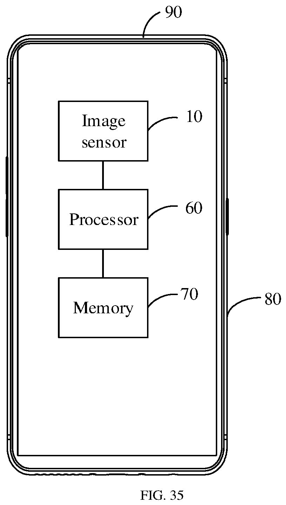

Based on the above technical problems, the present disclosure provides an image sensor 10 (shown in FIG. 2), a control method, a camera assembly 40 (shown in FIG. 20), and a mobile terminal 90 (shown in FIG. 35). The image sensor 10, the control method, the camera assembly 40, and the mobile terminal 90 in the embodiments of the present disclosure is adopted with a two-dimensional pixel array 11 including panchromatic pixels and color pixels to perform phase focusing, such that the accuracy of phase focusing is high in multiple types of application scenarios, and the scene adaptability of phase focusing is good.

A basic structure of the image sensor 10 will be introduced first. Referring to FIG. 1, which is a schematic view of an image sensor 10 according to an embodiment of the present disclosure. The image sensor 10 includes a two-dimensional pixel array 11, a vertical driving unit 12, a control unit 13, a column processing unit 14, and a horizontal driving unit 15.

For example, the image sensor 10 may be adopted with a complementary metal oxide semiconductor (CMOS) photosensitive element or a charge-coupled device (CCD) photosensitive element.

For example, the two-dimensional pixel array 11 includes a plurality of pixels 101 (shown in FIG. 2) two-dimensionally arranged in an array, and each pixel 101 includes a photoelectric conversion element 117 (shown in FIG. 3). Each pixel 101 converts light into electric charge according to an intensity of light incident thereon.

For example, the vertical driving unit 12 includes a shift register and an address decoder. The vertical driving unit 12 includes readout scanning and reset scanning functions. The readout scanning refers to sequentially scanning unit pixels line by line, and reading signals from these unit pixels line by line. For example, a signal output by each pixel 101 in a pixel row that is selected and scanned is transmitted to the column processing unit 14. The reset scanning is configured to reset the charge, and the photo-charge of the photoelectric conversion element 117 is discarded, such that the accumulation of new photo-charge may be started.

For example, the signal processing performed by the column processing unit 14 is correlated double sampling (CDS) processing. In the CDS process, the reset level and the signal level output by each pixel 101 in the selected pixel row are taken out, and a level difference is calculated. In this way, the signals of the pixels 101 in a row are obtained. The column processing unit 14 may have an analog-to-digital (A/D) conversion function for converting analog pixel signals into a digital format.

For example, the horizontal driving unit 15 includes a shift register and an address decoder. The horizontal driving unit 15 may sequentially scan the two-dimensional pixel array 11 column by column. Through the selection scanning operation performed by the horizontal driving unit 15, each pixel column is sequentially processed by the column processing unit 14, and is sequentially output.

For example, the control unit 13 may configure timing signals according to the operation mode, and utilize multiple types of timing signals to control the vertical driving unit 13, the column processing unit 14, and the horizontal driving unit 15 to work together.

The image sensor 10 further includes a filter (not shown) arranged on the two-dimensional pixel array 11. The spectral response (i.e., color of light that a pixel can receive) of each pixel in the two-dimensional pixel array 11 is determined by the color of the filter corresponding to the pixel. The color pixels and panchromatic pixels in the present disclosure refer to pixels that can respond to light whose color is the same as the color of the corresponding filter.

Referring to FIG. 2, the image sensor 10 further includes a filter array 16 and a lens array 17. Along a light-receiving direction of the image sensor 10, the lens array 17, the filter 16, and the two-dimensional pixel array 11 are arranged in sequence. The plurality of pixels 101 in the two-dimensional pixel array 11 can receive the light passing through the lens array 17 and the filter 16. The filter array 16 includes a plurality of filters 160, the filter array 160 may partially or completely cover the pixel array 11, and each filter 160 correspondingly covers one pixel 101 in the two-dimensional pixel array 11. The lens array 17 includes a plurality of lenses 170, and each lens 170 correspondingly covers a plurality of pixels 101 in the two-dimensional pixel array 11.

FIG. 3 is a schematic view of a pixel circuit 110 according to some embodiments of the present disclosure. The working principle of the pixel circuit 110 will be described below in conjunction with FIG. 3.

As shown in FIG. 3, the pixel circuit 110 includes a photoelectric conversion element 117 (e.g., photodiode PD), an exposure control circuit 116 (e.g., transfer transistor 112), a reset circuit (e.g., reset transistor 113), and an amplifier circuit (e.g., amplifier transistor 114), and a selection circuit (e.g., selection transistor 115). In the embodiments of the present disclosure, the transfer transistor 112, the reset transistor 113, the amplifier transistor 114, and the selection transistor 115 are, for example, MOS transistors, but are not limited thereto.

For example, referring to FIGS. 1 and 3, the gate TG of the transfer transistor 112 is connected to the vertical driving unit 12 through an exposure control line (not shown in the figure); the gate RG of the reset transistor 113 is connected to the vertical driving unit 12 through a reset control line (not shown in the figure); the gate SEL of the selection transistor 115 is connected to the vertical driving unit 12 through a selection line (not shown in the figure). The exposure control circuit 116 (for example, the transfer transistor 112) in each pixel circuit 110 is electrically connected to the photoelectric conversion element 117 for transferring the potential accumulated by the photoelectric conversion element 117 after being irradiated with light. For example, the photoelectric conversion element 117 includes a photodiode PD, and the anode of the photodiode PD is connected to the ground, for example. The photodiode PD converts the received light into electric charge. The cathode of the photodiode PD is connected to a floating diffusion unit FD through the exposure control circuit 116 (for example, the transfer transistor 112). The floating diffusion unit FD is connected to the gate of the amplifier transistor 114 and the source of the reset transistor 113.

For example, the exposure control circuit 116 is the transfer transistor 112, and the control terminal TG of the exposure control circuit 116 is the gate of the transfer transistor 112. When a pulse of an active level (for example, VPIX level) is transmitted to the gate of the transfer transistor 112 through the exposure control line, the transfer transistor 112 is turned on. The transfer transistor 112 transfers the photoconverted charge from the photodiode PD to the floating diffusion unit FD.

For example, the drain of the reset transistor 113 is connected to the pixel power supply VPIX. The source of the reset transistor 113 is connected to the floating diffusion unit FD. Before the charge is transferred from the photodiode PD to the floating diffusion unit FD, the pulse of the effective reset level is transmitted to the gate of the reset transistor 113 through the reset line, and the reset transistor 113 is turned on. The reset transistor 113 resets the floating diffusion unit FD to the pixel power supply VPIX.

For example, the gate of the amplifier transistor 114 is connected to the floating diffusion unit FD. The drain of the amplifier transistor 114 is connected to the pixel power supply VPIX. After the floating diffusion unit FD is reset by the reset transistor 113, the amplifier transistor 114 outputs a reset level through an output terminal OUT through the selection transistor 115. After the charge of the photodiode PD is transferred by the transfer transistor 112, the amplifier transistor 114 outputs a signal level through the output terminal OUT through the selection transistor 115.

For example, the drain of the selection transistor 115 is connected to the source of the amplifier transistor 114. The source of the selection transistor 115 is connected to the column processing unit 14 in FIG. 1 through the output terminal OUT. When the pulse of the active level is transmitted to the gate of the selection transistor 115 through the selection line, the selection transistor 115 is turned on. The signal output by the amplifier transistor 114 is transmitted to the column processing unit 14 through the selection transistor 115.

It should be noted that the pixel structure of the pixel circuit 110 in the embodiments of the present disclosure is not limited to the structure shown in FIG. 3. For example, the pixel circuit 110 may have a three-transistor pixel structure, in which the functions of the amplifier transistor 114 and the selecting transistor 115 are performed by one transistor. For example, the exposure control circuit 116 is not limited to the way of a single transfer transistor 112, and other electronic devices or structures with the function of controlling the conduction of the control terminal may be applied as the exposure control circuit in the embodiments of the present disclosure. The single transfer transistor 112 is simple, low cost, and easy to control to implement.

FIGS. 4 to 17 illustrate various examples of arrangement of the pixels 101 and coverage of the lenses 170 in the image sensor 10 (shown in FIG. 1). Referring to FIGS. 2 and 4 to FIG. 17, the image sensor 10 includes a two-dimensional pixel array consisting of a plurality of color pixels (e.g., a plurality of first color pixels A, a plurality of second color pixels B, and a plurality of third color pixels C) and a plurality of panchromatic pixels W (also known as the pixel array 11 shown in FIG. 1). Among them, the color pixels and panchromatic pixels are distinguished by the band of light that can pass through the filter 160 covered thereon. Color pixels have a narrower spectral response than panchromatic pixels. The response spectrum of a color pixel is, for example, a portion of the response spectrum of a panchromatic pixel W. The two-dimensional pixel array 11 is composed of a plurality of smallest repeating units (FIGS. 4 to 17 show various examples of a smallest repeating unit in the image sensor 10), and the smallest repeating units are duplicated and arranged in rows and columns. Each smallest repeating unit includes a plurality of sub-units, and each sub-unit includes a plurality of single-color pixels and some of the panchromatic pixels. For example, each smallest repeating unit includes four sub-units, where one sub-unit includes multiple single-color pixels A and multiple panchromatic pixels W, two sub-units include multiple single-color pixels B and multiple panchromatic pixels W, and the remaining one sub-unit includes multiple single-color pixels C and multiple panchromatic pixels W.

For example, the number of pixels 101 in the rows and the number of pixels 101 in the columns of the smallest repeating unit are equal. For example, the smallest repeating unit includes, but is not limited to, a smallest repeating unit of 4 rows and 4 columns, 6 rows and 6 columns, 8 rows and 8 columns, and 10 rows and 10 columns. For example, the number of pixels 101 in the rows and the number of pixels 101 in the columns of the sub-unit is equal. For example, the sub-unit includes, but is not limited to, a sub-unit of 2 rows and 2 columns, 3 rows and 3 columns, 4 rows and 4 columns, and 5 rows and 5 columns. This setting helps to equalize the resolution and balance the color representation of images in both row and column directions, improving the display.

In an example, in the smallest repeating unit, the panchromatic pixels W are arranged in a first diagonal direction D1, the color pixels are arranged in a second diagonal direction D2, and the first diagonal direction D1 is different from the second diagonal direction D2.

For example, FIG. 4 is a schematic view of the arrangement of the pixels 101 of the smallest repeating unit and the coverage of the lens 170 in an embodiment of the present disclosure. The smallest repeating unit is of 4 rows, 4 columns and 16 pixels, and each sub-unit is of 2 rows, 2 columns and 4 pixels. The arrangement is as follows:
W A W B
A W B W
W B W C
B W C W
where W represents a panchromatic pixel; A represents a first color pixel among multiple color pixels; B represents a second color pixel among the multiple color pixels; C represents a third color pixel among the multiple color pixels.

As shown in FIG. 4, the panchromatic pixels W are arranged in the first diagonal direction D1 (that is, the direction connecting the upper left corner and the lower right corner in FIG. 4), and the color pixels are arranged in the second diagonal direction D2 (for example, the direction connecting the lower left corner and the upper right corner in FIG. 4), the first diagonal direction D1 is different from the second diagonal direction D2. For example, the first diagonal and the second diagonal are perpendicular.

It should be noted that the first diagonal direction D1 and the second diagonal direction D2 are not limited to the diagonal, but also include directions parallel to the diagonal. The "direction" here is not a single direction, but may be understood as the concept of a "straight line" indicating the arrangement, and there can be two-way directions at both ends of the straight line.

As shown in FIG. 4, one lens 170 covers multiple pixels 101 in a sub-unit, that is, covers 4 pixels 101 in 2 rows and 2 columns. Of course, in other examples, one lens 170 can also cover multiple pixels 101 in multiple sub-units. For example, one lens 170 covers multiple pixels 101 in 2 sub-units, one lens 170 covers multiple pixels 101 in three sub-units, one lens 170 covers multiple pixels 101 in 4 sub-units, and one lens 170 covers multiple pixels 101 in 6 sub-units, etc., which are not limited herein.

For example, FIG. 5 is a schematic view of the arrangement of the pixels 101 of the smallest repeating unit and the coverage of the lens 170 in another embodiment of the present disclosure. The smallest repeating unit is of 4 rows, 4 columns and 16 pixels 101, and each sub-unit is of 2 rows, 2 columns and 4 pixels 101. The arrangement is as follows:
A W B W
W A W B
B W C W
W B W C
where W represents a panchromatic pixel; A represents a first color pixel among multiple color pixels; B represents a second color pixel among the multiple color pixels; C represents a third color pixel among the multiple color pixels.

As shown in FIG. 5, the panchromatic pixels W are arranged in the first diagonal direction D1 (that is, the direction connecting the upper right corner and the lower left corner in FIG. 5), and the color pixels are arranged in the second diagonal direction D2 (for example, the direction connecting the upper left corner and the lower right corner connect in FIG. 5). The first diagonal direction D1 is different from the second diagonal direction D2. For example, the first diagonal and the second diagonal are perpendicular.

As shown in FIG. 5, one lens 170 covers multiple pixels 101 in 4 sub-units, that is, covers 16 pixels 101 in 4 rows and 4 columns. Of course, in other examples, one lens 170 can also cover multiple pixels 101 in 1 sub-unit, or one lens 170 covers multiple pixels 101 in 2 sub-units, or one lens 170 covers multiple pixels 101 in 3 sub-units, or one lens 170 covers a plurality of pixels 101 in 5 sub-units, etc., which are not limited herein.

For example, FIG. 6 is a schematic view of the arrangement of the pixels 101 of the smallest repeating unit and the coverage of the lens 170 in another embodiment of the present disclosure. FIG. 7 is a schematic view of the arrangement of the pixels 101 of the smallest repeating unit and the coverage of the lens 170 in another embodiment of the present disclosure. In the embodiments of FIG. 6 and FIG. 7, corresponding to the arrangement and covering mode of FIG. 4 and FIG. 5, the first color pixel A is the red pixel R; the second color pixel B is the green pixel G; the third color pixel C is the blue pixel Bu.

It should be noted that, in some embodiments, the response band of the panchromatic pixel W is a visible light band (for example, 400 nm-760 nm). For example, the panchromatic pixel W is arranged with an infrared filter to filter out infrared light. In some embodiments, the response band of the panchromatic pixel W is the visible light wavelength band and the near-infrared wavelength band (for example, 400 nm-1000 nm), which matches the response band of the photoelectric conversion element (for example, photodiode PD) in the image sensor 10. For example, the panchromatic pixel W may be free of a filter, and the response band of the panchromatic pixel W is determined by the response band of the photodiode, that is, the response bands of the two match. The embodiments of the present disclosure include but are not limited to the above-mentioned waveband range.

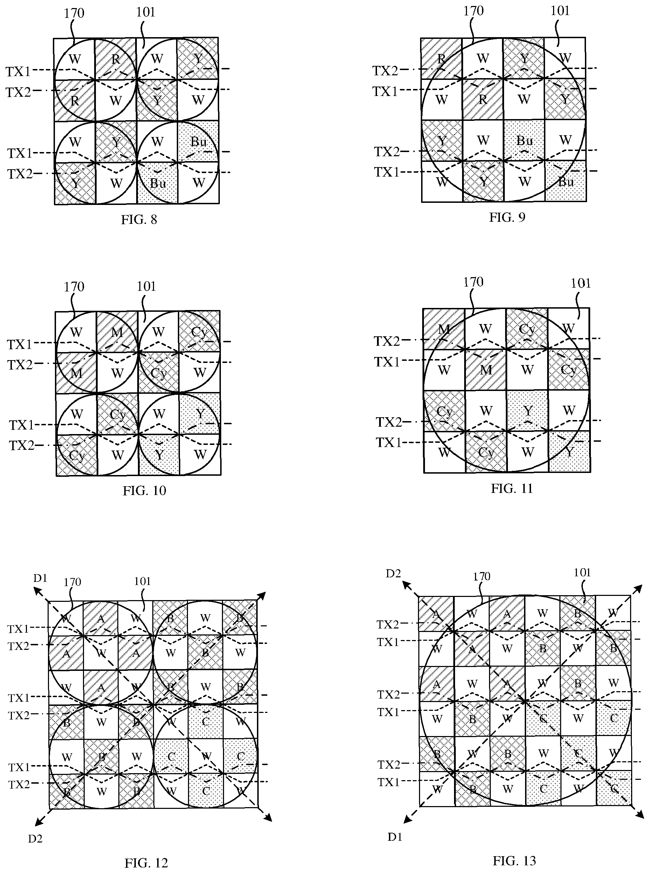

For example, FIG. 8 is a schematic view of the arrangement of the pixels 101 of the smallest repeating unit and the coverage of the lens 170 in another embodiment of the present disclosure. FIG. 9 is a schematic view of the arrangement of the pixels 101 of the smallest repeating unit and the coverage of the lens 170 in another embodiment of the present disclosure. In the embodiments of FIG. 8 and FIG. 9, corresponding to the arrangement and covering mode of FIG. 4 and FIG. 5 respectively, the first color pixel A is the red pixel R; the second color pixel B is the yellow pixel Y; the third color pixel C is the blue pixel Bu.

For example, FIG. 10 is a schematic view of the arrangement of the pixels 101 of the smallest repeating unit and the coverage of the lens 170 in another embodiment of the present disclosure. FIG. 11 is a schematic view of the arrangement of the pixels 101 of the smallest repeating unit and the coverage of the lens 170 in another embodiment of the present disclosure. In the embodiments of FIG. 10 and FIG. 11, corresponding to FIG. 4 and FIG. 5 and the covering arrangement, the first color pixel A is the magenta pixel M; the second color pixel B is the cyan pixel Cy; the third color pixel C is the yellow pixel Y.

For example, FIG. 12 is a schematic view of the arrangement of the pixels 101 of the smallest repeating unit and the coverage of the lens 170 in another embodiment of the present disclosure. The smallest repeating unit is of 6 rows, 6 columns and 36 pixels 101, and each sub-unit is of 3 rows, 3 columns and 9 pixels 101. The arrangement is as follows:
W A W B W B
A W A W B W
W A W B W B
B W B W C W
W B W C W C
B W B W C W
where W represents a panchromatic pixel; A represents a first color pixel among multiple color pixels; B represents a second color pixel among the multiple color pixels; C represents a third color pixel among the multiple color pixels.

As shown in FIG. 12, the panchromatic pixels W are arranged in the first diagonal direction D1 (that is, the direction connecting the upper left corner and the lower right corner in FIG. 12), and the color pixels are arranged in the second diagonal direction D2 (for example, the direction connecting the lower left corner and the upper right corner in FIG. 12). The first diagonal direction D1 is different from the second diagonal direction D2. For example, the first diagonal and the second diagonal are perpendicular.

As shown in FIG. 12, one lens 170 covers a plurality of pixels 101 in a sub-unit, that is, covers 9 pixels 101 in 3 rows and 3 columns. Of course, in other examples, one lens 170 can also cover multiple pixels 101 in multiple sub-units. For example, one lens 170 covers multiple pixels 101 in 2 sub-units, and one lens 170 covers multiple pixels 101 in 3 sub-units, one lens 170 covers multiple pixels 101 in 4 sub-units, and one lens 170 covers multiple pixels 101 in 6 sub-units, etc., which are not limited herein.

For example, FIG. 13 is a schematic view of the arrangement of the pixels 101 of the smallest repeating unit and the coverage of the lens 170 in another embodiment of the present disclosure. The smallest repeating unit is of 6 rows, 6 columns and 36 pixels 101, and each sub-unit is of 3 rows, 3 columns and 9 pixels 101. The arrangement is as follows:
A W A W B W
W A W B W B
A W A W B W
W B W C W C
B W B W C W
W B W C W C
where W represents a panchromatic pixel; A represents a first color pixel among multiple color pixels; B represents a second color pixel among the multiple color pixels; C represents a third color pixel among the multiple color pixels.

As shown in FIG. 13, the panchromatic pixels W are arranged in the first diagonal direction D1 (that is, the direction connecting the upper right corner and the lower left corner in FIG. 13), and the color pixels are arranged in the second diagonal direction D2 (for example, the direction connecting the upper left corner and the lower right corner in FIG. 13). The first diagonal direction D1 is different from the second diagonal direction D2. For example, the first diagonal and the second diagonal are perpendicular.

As shown in FIG. 13, one lens 170 covers a plurality of pixels 101 in 4 sub-units, that is, covers 36 pixels 101 in 6 rows and 6 columns. Of course, in other examples, one lens 170 can also cover multiple pixels 101 in 1 sub-unit, or one lens 170 can cover multiple pixels 101 in 2 sub-units, or one lens 170 can cover multiple pixels 101 in 3 sub-units, or one lens 170 can cover multiple pixels 101 in 5 sub-units, etc., which are not limited herein.

For example, the first color pixel A in the smallest repeating unit of FIG. 12 and FIG. 13 may be a red pixel R, the second color pixel B may be a green pixel G, and the third color pixel C may be a blue pixel Bu. Alternatively, the first color pixel A in the smallest repeating unit of FIG. 12 and FIG. 13 may be a red pixel R, the second color pixel B may be a yellow pixel Y, and the third color pixel C may be a blue pixel Bu. Alternatively, the first color pixel A in the smallest repeating unit of FIG. 12 and FIG. 13 may be a magenta pixel M, the second color pixel B may be a cyan pixel Cy, and the third color pixel C may be a yellow pixel Y.

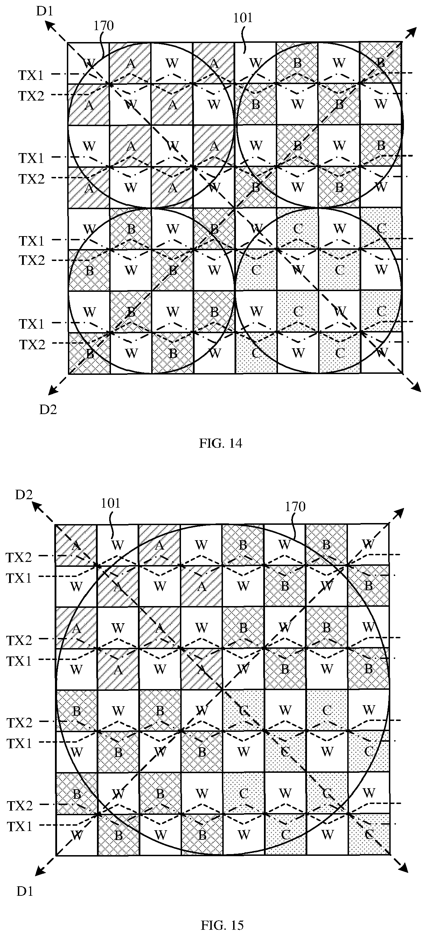

For example, FIG. 14 is a schematic view of the arrangement of the pixels 101 of the smallest repeating unit and the coverage of the lens 170 in another embodiment of the present disclosure. The smallest repeating unit is of 8 rows, 8 columns and 64 pixels 101, and each sub-unit is of 4 rows, 4 columns and 16 pixels 101. The arrangement is as follows:
W A W A W B W B
A W A W B W B W
W A W A W B W B
A W A W B W B W
W B W B W C W C
B W B W C W C W
W B W B W C W C
B W B W C W C W
where W represents a panchromatic pixel; A represents a first color pixel among multiple color pixels; B represents a second color pixel among the multiple color pixels; C represents a third color pixel among the multiple color pixels.

As shown in FIG. 14, the panchromatic pixels W are arranged in the first diagonal direction D1 (that is, the direction connecting the upper left corner and the lower right corner in FIG. 14), and the color pixels are arranged in the second diagonal direction D2 (for example, the direction connecting the lower left corner and the upper right corner in FIG. 14). The first diagonal direction D1 is different from the second diagonal direction D2. For example, the first diagonal and the second diagonal are perpendicular.

As shown in FIG. 14, one lens 170 covers a plurality of pixels 101 in a sub-unit, that is, covers 16 pixels 101 in 4 rows and 4 columns. Of course, in other examples, one lens 170 can also cover multiple pixels 101 in multiple sub-units. For example, one lens 170 covers multiple pixels 101 in 2 sub-units, and one lens 170 covers multiple pixels 101 in 3 sub-units, one lens 170 covers multiple pixels 101 in 4 sub-units, and one lens 170 covers multiple pixels 101 in 6 sub-units, etc., which are not limited herein.

For example, FIG. 15 is a schematic view of the arrangement of the pixels 101 of the smallest repeating unit and the coverage of the lens 170 in another embodiment of the present disclosure. The smallest repeating unit is of 8 rows, 8 columns and 64 pixels 101, and each sub-unit is of 4 rows, 4 columns and 16 pixels 101. The arrangement is as follows:
A W A W B W B W
W A W A W B W B
A W A W B W B W
W A W A W B W B
B W B W C W C W
W B W B W C W C
B W B W C W C W
W B W B W C W C
where W represents a panchromatic pixel; A represents a first color pixel among multiple color pixels; B represents a second color pixel among the multiple color pixels; C represents a third color pixel among the multiple color pixels.

As shown in FIG. 15, the panchromatic pixels W are arranged in the first diagonal direction D1 (that is, the direction connecting the upper right corner and the lower left corner in FIG. 15), and the color pixels are arranged in the second diagonal direction D2 (for example, the direction connecting the upper left corner and the lower right corner in FIG. 15). The first diagonal direction D1 is different from the second diagonal direction D2. For example, the first diagonal and the second diagonal are perpendicular.

As shown in FIG. 15, one lens 170 covers multiple pixels 101 in 4 sub-units, that is, 64 pixels 101 in 8 rows and 8 columns. Of course, in other examples, one lens 170 can also cover multiple pixels 101 in 1 sub-unit, or one lens 170 can cover multiple pixels 101 in 2 sub-units, or one lens 170 can cover multiple pixels 101 in 3 sub-units, or one lens 170 can cover multiple pixels 101 in 5 sub-units, etc., which are not limited herein.

In the examples shown in FIGS. 4 to 15, in each sub-unit, adjacent panchromatic pixels W are arranged diagonally, and adjacent color pixels are also arranged diagonally. In another example, in each sub-unit, adjacent panchromatic pixels are arranged in the horizontal direction, and adjacent color pixels are also arranged in the horizontal direction; alternatively, adjacent panchromatic pixels are arranged in the vertical direction, and adjacent color pixels are arranged in the vertical direction. The panchromatic pixels in adjacent sub-units may be arranged in a horizontal direction or a vertical direction, and the color pixels in adjacent sub-units may also be arranged in a horizontal direction or a vertical direction.

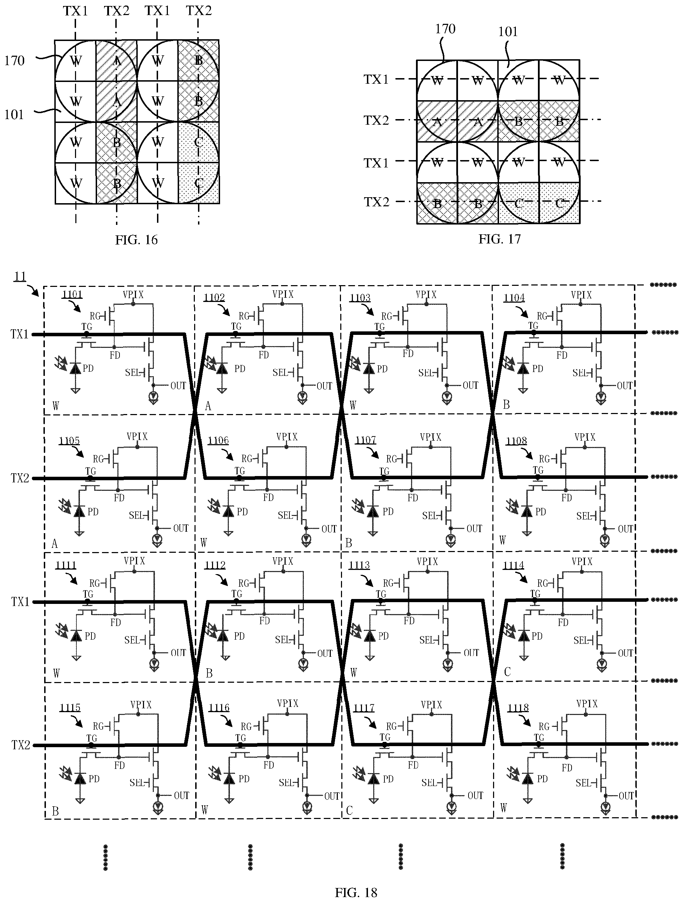

For example, FIG. 16 is a schematic view of the arrangement of the pixels 101 of the smallest repeating unit and the coverage of the lens 170 in another embodiment of the present disclosure. The smallest repeating unit is of 4 rows, 4 columns and 16 pixels 101, and each sub-unit is of 2 rows, 2 columns and 8 pixels 101. The arrangement is as follows:
W A W B
W A W B
W B W C
W B W C
where W represents a panchromatic pixel; A represents a first color pixel among multiple color pixels; B represents a second color pixel among the multiple color pixels; C represents a third color pixel among the multiple color pixels.

As shown in FIG. 16, in each sub-unit, adjacent panchromatic pixels W are arranged in the vertical direction, and adjacent color pixels are also arranged in the vertical direction. One lens 170 covers multiple pixels 101 in one sub-unit, that is, covers 4 pixels 101 in 2 rows and 2 columns. Of course, in other examples, one lens 170 can also cover multiple pixels 101 in multiple sub-units. For example, one lens 170 covers multiple pixels 101 in 2 sub-units, one lens 170 covers multiple pixels 101 in 3 sub-units, one lens 170 covers multiple pixels 101 in 4 sub-units, and one lens 170 covers multiple pixels 101 in 6 sub-units, etc., which are not limited herein.

For example, FIG. 17 is a schematic view of the arrangement of the pixels 101 of the smallest repeating unit and the coverage of the lens 170 in another embodiment of the present disclosure. The smallest repeating unit is of 4 rows, 4 columns and 16 pixels 101, and each sub-unit is of 2 rows, 2 columns and 4 pixels 101. The arrangement is as follows:
W W W W
A A B B
W W W W
B B C C
where W represents a panchromatic pixel; A represents a first color pixel among multiple color pixels; B represents a second color pixel among the multiple color pixels; C represents a third color pixel among the multiple color pixels.

As shown in FIG. 17, in each sub-unit, adjacent panchromatic pixels W are arranged in the horizontal direction, and adjacent color pixels are also arranged in the horizontal direction. One lens 170 covers multiple pixels 101 in one sub-unit, that is, covers 4 pixels 101 in 2 rows and 2 columns. Of course, in other examples, one lens 170 can also cover multiple pixels 101 in multiple sub-units. For example, one lens 170 covers multiple pixels 101 in 2 sub-units, one lens 170 covers multiple pixels 101 in 3 sub-units, one lens 170 covers multiple pixels 101 in 4 sub-units, and one lens 170 covers multiple pixels 101 in 6 sub-units, etc., which are not limited herein.

In the smallest repeating unit in FIGS. 16 and 17, the first color pixel A may be a red pixel R, the second color pixel B may be a green pixel G, and the third color pixel C may be a blue pixel Bu. Alternatively, in the smallest repeating unit of FIGS. 16 and 17, the first color pixel A may be a red pixel R, the second color pixel B may be a yellow pixel Y, and the third color pixel C may be a blue pixel Bu. Alternatively, in the smallest repeating unit of FIGS. 16 and 17, the first color pixel A may be a magenta pixel M; the second color pixel B may be a cyan pixel Cy; and the third color pixel C may be a yellow pixel Y.

For example, multiple panchromatic pixels and multiple color pixels in any of the two-dimensional pixel arrays 11 (shown in FIG. 2) shown in FIGS. 4-17 may all be controlled by a same exposure control line (not shown). In this case, the first exposure time of the panchromatic pixels is equal to the second exposure time of the color pixels.

For example, multiple panchromatic pixels and multiple color pixels in any of the two-dimensional pixel arrays 11 (shown in FIG. 2) shown in FIGS. 4-17 may all be controlled by different exposure control lines, respectively. In this way, independent control of the exposure time of panchromatic pixels and the exposure time of color pixels is realized. For the two-dimensional pixel array 11 of any of the arrangements shown in FIGS. 4 to 15, the control terminals (not shown) of the exposure control circuits of at least two panchromatic pixels adjacent in the first diagonal direction are electrically connected to a first exposure control line (TX1), and the control terminals (not shown) of the exposure control circuits of at least two color pixels adjacent in the second diagonal direction are electrically connected to a second exposure control line (TX2). For the two-dimensional pixel array 11 of any of the arrangements shown in FIGS. 16 and 17, the control terminals (not shown) of the exposure control circuits of the panchromatic pixels in the same row or column are electrically connected to the first exposure control line (TX1), and the control terminals (not shown) of the exposure control circuits of the color pixels in the same row or column are electrically connected to the second exposure control line (TX2). The first exposure control line can transmit a first exposure signal to control the first exposure time of the panchromatic pixels, and the second exposure control line can transmit a second exposure signal to control the second exposure time of the color pixels.

FIG. 18 is a schematic view of a two-dimensional pixel array and a connection mode of an exposure control line according to some embodiments of the present disclosure. Referring to FIG. 18, the arrangement of pixels in the two-dimensional pixel array 11 is as follows:
W A W B
A W B W
W B W C
B W C W

It should be noted that, for the convenience of illustration, FIG. 18 only shows part of the pixels (a smallest repeating unit) in the two-dimensional pixel array 11, and other surrounding pixels and connections are replaced by ellipsis "...".

As shown in FIG. 18, pixels 1101, 1103, 1106, 1108, 1111, 1113, 1116, and 1118 are panchromatic pixels W, pixels 1102, 1105 are first-color pixels A (for example, red pixels R), and pixels 1104, 1107, 1112, 1115 are second color pixels B (for example, the green pixels G), and pixels 1114 and 1117 are third color pixels C (for example, blue pixels Bu). It can be seen from FIG. 18 that the control terminal TG of the exposure control circuit in the panchromatic pixel W (pixels 1101, 1103, 1106, and 1108) is connected to a first exposure control line TX1, and the control terminal TG of the exposure control circuit in the panchromatic pixel W (1111, 1113, 1116, and 1118) is connected to another first exposure control line TX1; the control terminal TG of the exposure control circuit in the first color pixel A (pixels 1102 and 1105) and) the control terminal TG of the exposure control circuit in the second color pixel B (pixels 1104 and 1107) are connected to a second exposure control line TX2, and the control terminal TG of the exposure control circuit in the second color pixel B (pixels 1112 and 1115) and the control terminal TG of the exposure control circuit in the third color pixel C (pixels 1114 and 1117) are connected to another second exposure control line TX2. Each first exposure control line TX1 can control the exposure duration of the panchromatic pixel through a first exposure control signal; each second exposure control line TX2 can control the exposure duration of the color pixel (such as the first color pixel A and the second color pixel B, the second color pixel B and the third color pixel C) through a second exposure control signal. This enables independent control of the exposure time of panchromatic pixels and color pixels. For example, it can be realized that when the panchromatic pixel exposure ends, the color pixels continue to be exposed to achieve an ideal imaging effect.

For the pixel array 11 shown in FIGS. 4 to 15, the first exposure control line TX1 has a "W" shape, and the first exposure control line TX1 is electrically connected to the control terminals of the exposure control circuits in the panchromatic pixels of two adjacent rows. The second exposure control line TX2 has a "W" shape, and the second exposure control line TX2 is electrically connected to the control terminals of the exposure control circuits in the color pixels of two adjacent rows. Taking FIG. 4 as an example, the panchromatic pixels in the first row and the second row are connected together by the first exposure control line TX1 in the shape of "W" to realize individual control of the exposure time of the panchromatic pixels. The color pixels (A and B) in the first row and the second row are connected together by the second exposure control line TX2 in the shape of "W" to realize individual control of the exposure time of the color pixels. The panchromatic pixels in the third row and the fourth row are connected together by another first exposure control line TX1 in the shape of "W" to realize the individual control of the exposure time of the panchromatic pixels. The color pixels (B and C) in the third row and the fourth row are connected together by another second exposure control line TX2 in the shape of "W" to realize individual control of the exposure time of the color pixels.

When the exposure time of the panchromatic pixel and the exposure time of the color pixel are independently controlled, the first exposure time of the panchromatic pixel may be less than the exposure time of the color pixel. For example, the ratio of the first exposure time to the second exposure time may be one of 1:2, 1:3, or 1:4. For example, in a dark environment, the color pixels are more likely to be underexposed, and the ratio of the first exposure time to the second exposure time may be adjusted to 1:2, 1:3, or 1:4 according to the brightness of the environment. When the exposure ratio is the above-mentioned integer ratio or close to the integer ratio, it is beneficial to the setting and control of a timing setting signal.

In some embodiments, the relative relationship between the first exposure time and the second exposure time may be determined according to the environmental brightness. For example, when the environmental brightness is less than or equal to a brightness threshold, the panchromatic pixels are exposed at the first exposure time equal to the second exposure time; when the environmental brightness is greater than the brightness threshold, the panchromatic pixels are exposed at the first exposure time less than the second exposure time. When the environmental brightness is greater than the brightness threshold, the relative relationship between the first exposure time and the second exposure time may be determined according to a brightness difference between the environmental brightness and the brightness threshold. For example, the greater the brightness difference, the smaller the ratio of the first exposure time to the second exposure time. For example, when the brightness difference is within a first range [a,b), the ratio of the first exposure time to the second exposure time is 1:2; when the brightness difference is within a second range [b,c), the ratio of the first exposure time to the second exposure time is 1:3; when the brightness difference is greater than or equal to c, the ratio of the first exposure time to the second exposure time is 1:4.

Referring to FIG. 2 and FIG. 19, the control method in the embodiments of the present disclosure may be applied to the image sensor 10 described in any one of the above embodiments. The control method may include operations at blocked illustrated in FIG. 19.
At block 01: outputting panchromatic pixel information by exposing a plurality of panchromatic pixels, and outputting color pixel information by exposing a plurality of color pixels;
At block 02: obtaining an environmental brightness;
At block 03: in response to the environmental brightness being less than or equal to a first predetermined brightness, performing focusing by calculating a phase difference according to the panchromatic pixel information;
At block 04: in response to the environmental brightness being greater than or equal to a second predetermined brightness, performing focusing by calculating the phase difference according to the color pixel information;
At block 05: in response to the environmental brightness being greater than the first predetermined brightness and less than the second predetermined brightness, performing focusing by calculating the phase difference information according to at least one of the panchromatic pixel information and the color pixel information;
At block 06: obtaining a target image by exposing a plurality of pixels 101 in a two-dimensional pixel array 11 in an in-focus state.

Referring to FIG. 2 and FIG. 20, the control method in the embodiments of the present disclosure may be implemented by the camera assembly 40 in the embodiments of the present disclosure. The camera assembly 40 includes a camera 30, the image sensor 10 described in any one of the above embodiments, and a processing chip 20. The image sensor 10 may receive light incident through the camera 30 and generate an electrical signal. The image sensor 10 is electrically connected to the processing chip 20. The processing chip 20 may be packaged with the image sensor 10 and the camera 30 in a housing of camera assembly 40; alternatively, the image sensor 10 and the camera 30 are packaged in the housing of the camera assembly 40, and the processing chip 20 is arranged outside the housing. Step 01 may be implemented by the image sensor 10. Step 02, step 03, step 04, and step 05 may all be implemented by the processing chip 20. Step 06 may be implemented by the image sensor 10 and the processing chip 20 together. That is, the panchromatic pixels in the image sensor 10 are exposed to output the panchromatic pixel information, and the color pixels in the image sensor 10 are exposed to output the color pixel information. The processing chip 20 may obtain the environmental brightness. When the environmental brightness is less than or equal to the first predetermined brightness, the processing chip 20 calculates the phase difference according to the panchromatic pixel information to perform focusing. When the environmental brightness is greater than or equal to the second predetermined brightness, the processing chip 20 calculates the phase difference according to the color pixel information to perform focusing. When the environmental brightness is greater than the first predetermined brightness and less than the second predetermined brightness, the processing chip 20 calculates the phase difference information according to at least one of the panchromatic pixel information and the color pixel information to perform focusing. In the in-focus state, the pixels 101 in the two-dimensional pixel array 11 of the image sensor 10 are exposed, and the processing chip 20 obtains the target image according to an exposure result of the multiple pixels 101.

Among them, the first predetermined brightness may be less than the second predetermined brightness. The environmental brightness being greater than the first predetermined brightness and less than the second predetermined brightness may be understood as the environmental brightness being within a predetermined brightness range.

When the environmental brightness is greater than the first predetermined brightness and less than the second predetermined brightness, the performing focusing by calculating the phase difference information according to at least one of the panchromatic pixel information and the color pixel information includes the following situations: (1) calculating the phase difference information only based on the panchromatic pixel information for focusing; (2) calculating the phase difference information only based on at least one of the color pixel information for focusing; (3) calculating the phase difference information based on panchromatic pixel information and color pixel information at the same time for focusing.

It can be understood that, in the image sensor containing pixels of multiple colors, pixels of different colors receive different amounts of exposure per unit time. After some colors are saturated, some other colors have not yet been exposed to an ideal state. For example, the exposure to 60%-90% of the saturated exposure may have a relatively good signal-to-noise ratio and accuracy, but the embodiments of the present disclosure are not limited thereto.

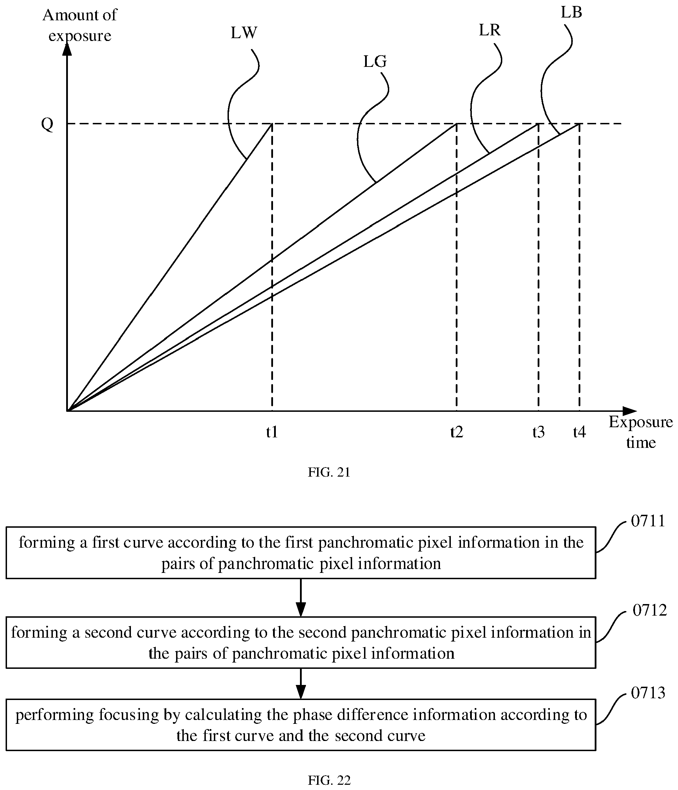

In FIG. 21, RGBW (red, green, blue, panchromatic) is taken as an example. Referring to FIG. 21, the horizontal axis is the exposure time, the vertical axis is the exposure, Q is the saturated exposure, LW is an exposure curve of the panchromatic pixel W, LG is an exposure curve of the green pixel G, LR is an exposure curve of the red pixel R, and LB is an exposure curve of the blue pixel.

It can be seen from FIG. 21 that the slope of the exposure curve LW of the panchromatic pixel W is the largest, that is, the panchromatic pixel W can obtain more exposure per unit time and is saturated at time t1. The slope of the exposure curve LG of the green pixel G is second, and the green pixel is saturated at time t2. The slope of the exposure curve LR of the red pixel R is third, and the red pixel is saturated at time t3. The slope of the exposure curve LB of the blue pixel B is the smallest, and the blue pixel is saturated at time t4. It can be seen from FIG. 21 that the amount of exposure received by the panchromatic pixel W per unit time is greater than the amount of exposure received by the color pixel per unit time, that is, the sensitivity of the panchromatic pixel W is higher than that of the color pixel.

The existing phase focusing is usually implemented based on image sensors arranged in a Bayer array, but the scene adaptability of this phase focusing method is low. Specifically, in a high-brightness environment, the R, G, and B pixels can receive more light and can output pixel information with high signal-to-noise ratio. In this case, the accuracy of phase focusing is high; while in a low-brightness environment, the R, G, and B pixels can receive less light, thus the signal-to-noise ratio of the output pixel information is low, and the accuracy of phase focusing is also low.

The control method and camera assembly 40 in the embodiments of the present disclosure are adopted with the image sensor 10 including panchromatic pixels and color pixels to achieve phase focusing, such that the phase focusing may be performed by using the panchromatic pixels with high sensitivity in a low-brightness environment (e.g., brightness less than or equal to the first predetermined brightness), by using the color pixels with low sensitivity in a high-brightness environment (e.g., brightness greater than or equal to the second predetermined brightness), and by using at least one of the panchromatic pixels and the color pixels in a moderate brightness environment (e.g., greater than the first predetermined brightness and less than the second predetermined brightness). In this way, the problem of inaccurate focusing due to low signal-to-noise ratio of pixel information output from color pixels may be prevented when using color pixels for phase focusing at low environmental brightness, and the problem of inaccurate focusing due to oversaturation of panchromatic pixels may be prevented when using panchromatic pixels for focusing at high environmental brightness, resulting in a high accuracy of phase focusing in many types of application scenarios and a good scene adaptation of phase focusing.

In addition, the control method and the camera assembly 40 in the embodiments of the present disclosure do not need to be designed to shield the pixels 101 in the image sensor 10. All the pixels 101 can be used for imaging, and no dead pixel compensation is required, which is beneficial to improve the quality of the target image obtained by the camera assembly 40.

In addition, all the pixels 101 in the control method and the camera assembly 40 in the embodiments of the present disclosure can be used for phase focusing, and the accuracy of phase focusing is higher.

Referring to FIG. 22, in some embodiments, the panchromatic pixel information includes first panchromatic pixel information and second panchromatic pixel information. The first panchromatic pixel information and the second panchromatic pixel information are respectively output by panchromatic pixels located in a first orientation of the lens 170 (shown in FIG. 2) and panchromatic pixels located in a second orientation of the lens 170. One of the first panchromatic pixel information and a corresponding second panchromatic pixel information serve as a pair of panchromatic pixel information. The performing focusing by calculating a phase difference according to the panchromatic pixel information includes:
At block 0711: forming a first curve according to the first panchromatic pixel information in the pairs of panchromatic pixel information;
At block 0712: forming a second curve according to the second panchromatic pixel information in the pairs of panchromatic pixel information; and
At block 0713: performing focusing by calculating the phase difference information according to the first curve and the second curve.

Referring to FIG. 20 again, in some embodiments, Step 0711, Step 0712, and Step 0713 may all be implemented by the processing chip 20. That is, the processing chip 20 may be configured to form the first curve according to the first panchromatic pixel information in the multiple pairs of panchromatic pixel information, form the second curve according to the second panchromatic pixel information in the multiple pairs of panchromatic pixel information, and calculate the phase difference information according to the first curve and the second curve for focusing.

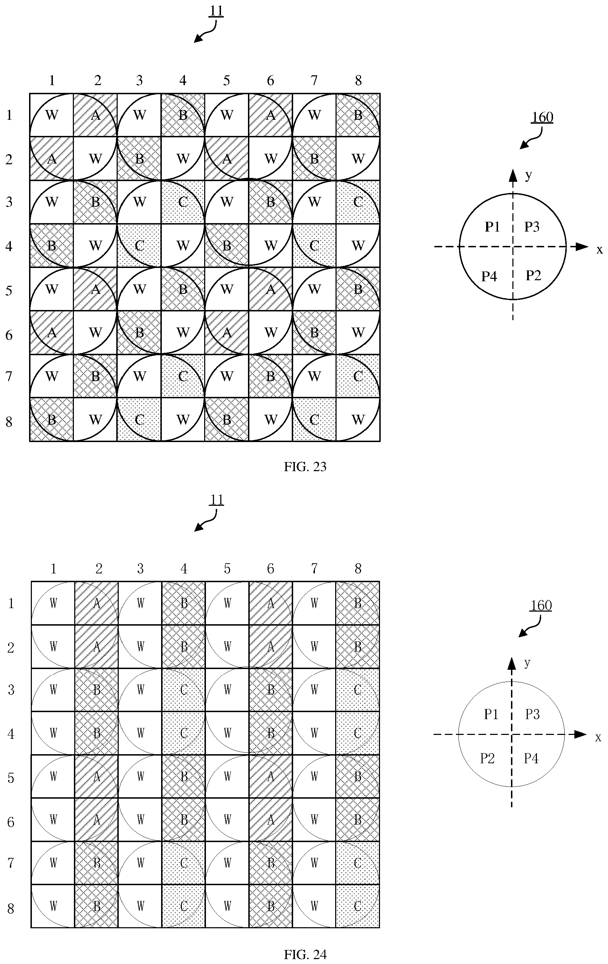

Specifically, referring to FIG. 23, in an example, an xy coordinate system is established with the center of each lens 170 as an origin. A part of the lens 170 located in the second quadrant belongs to the first orientation P1, and a part of the lens 170 located in the fourth quadrant belongs to the second orientation P2. Corresponding to each sub-unit of the pixel array 11 in FIG. 23, one panchromatic pixel W is located in the first orientation P1 of the lens 170, and the other panchromatic pixel W is located in the second orientation P2 of the lens 170. The first panchromatic pixel information is output by the panchromatic pixels W in the first orientation P1 of the lens 170, and the second panchromatic pixel information is output by the panchromatic pixels W in the second orientation P2 of the lens 170. For example, panchromatic pixels W11, W13, W15, W17, W31, W33, W35, W37, W51, W53, W55, W57, W71, W73, W75, W77 are located in the first orientation P1, and panchromatic pixels W22, W24, W26, W28, W42, W44, W46, W48, W62, W64, W66, W68, W82, W84, W86, W88 are located in the second orientation P2. The panchromatic pixels in a same sub-unit form a pair of panchromatic pixels. Correspondingly, the panchromatic pixel information of the panchromatic pixels in the same sub-unit forms a pair of panchromatic pixel information. For example, the panchromatic pixel information of the panchromatic pixel W11 and the panchromatic pixel information of the panchromatic pixel W22 form a pair of panchromatic pixel information. The panchromatic pixel information of the panchromatic pixel W13 and the panchromatic pixel information of the panchromatic pixel W24 form a pair of panchromatic pixel information. The panchromatic pixel information of the color pixel W15 and the panchromatic pixel information of the panchromatic pixel W26 form a pair of panchromatic pixel information. The panchromatic pixel information of the panchromatic pixel W17 and the panchromatic pixel information of the panchromatic pixel W28 form a pair of panchromatic pixel information, and so on.

Referring to FIG. 24, in another example, an xy coordinate system is established with the center of each lens 170 as an origin. A part of the lens 170 located in the second quadrant belongs to the first orientation P1, and a part of the lens 170 located in the third quadrant belongs to the second orientation P2. Corresponding to each sub-unit of the pixel array 11 in FIG. 24, one panchromatic pixel W is located in the first orientation P1 of the lens 170, and the other panchromatic pixel W is located in the second orientation P2 of the lens 170. The first panchromatic pixel information is output by the panchromatic pixel W in the first orientation P1 of the lens 170, and the second panchromatic pixel information is output by the panchromatic pixel W in the second orientation P2 of the lens 170. For example, panchromatic pixels W11, W13, W15, W17, W31, W33, W35, W37, W51, W53, W55, W57, W71, W73, W75, W77 are located in the first direction P1, and panchromatic pixels W21, W23, W25, W27, W41, W43, W45, W47, W61, W63, W65, W67, W81, W83, W85, W87 are located in the second direction P2. The panchromatic pixels in a same sub-unit form a pair of panchromatic pixels. Correspondingly, the panchromatic pixel information of the panchromatic pixels in the same sub-unit forms a pair of panchromatic pixel information. For example, the panchromatic pixel information of the panchromatic pixel W11 and the panchromatic pixel information of the panchromatic pixel W21 form a pair of panchromatic pixel information. The panchromatic pixel information of the panchromatic pixel W13 and the panchromatic pixel information of the panchromatic pixel W23 form a pair of panchromatic pixel information. The panchromatic pixel information of the color pixel W15 and the panchromatic pixel information of the panchromatic pixel W25 form a pair of panchromatic pixel information. The panchromatic pixel information of the panchromatic pixel W17 and the panchromatic pixel information of the panchromatic pixel W27 form a pair of panchromatic pixel information, and so on.

After obtaining multiple pairs of panchromatic pixel information, the processing chip 20 forms the first curve according to the first panchromatic pixel information in the multiple pairs of panchromatic pixel information, forms the first curve according to the second panchromatic pixel in the multiple pairs of panchromatic pixel information, and calculates the phase difference according to the first curve and the second curve. For example, a plurality of first panchromatic pixel information may depict one histogram curve (i.e., a first curve), and a plurality of second panchromatic pixel information may depict another histogram curve (i.e., a second curve). Subsequently, the processing chip 20 may calculate the phase difference information between the two histogram curves according to the positions of the peaks of the two histogram curves. Subsequently, the processing chip 20 may determine the distance that the camera 30 is required to move according to the phase difference information and pre-calibrated parameters. Subsequently, the processing chip 20 may control the camera 30 to move the distance required to move such that the camera 30 is in focus.

In the two-dimensional pixel array 11 shown in FIG. 24, the pairs of panchromatic pixels are arranged in the vertical direction. In a case that phase focusing is performed based on this arrangement, when a scene containing a large number of pure vertical stripes is to be handled, the difference between the peak value of the first curve and the peak value of the second curve may be small, resulting in the calculated phase difference information not being accurate enough, and further affecting the accuracy of focusing. In the two-dimensional pixel array 11 shown in FIG. 23, the pairs of panchromatic pixels are arranged diagonally. When phase focusing is performed based on this arrangement, whether it is a scene containing a large number of pure vertical stripes or a scene containing a large number of pure horizontal stripes, the difference between the peak value of the first curve and the peak value of the second curve is not too small, and the calculated phase difference information is more accurate, which can improve the accuracy of focusing.

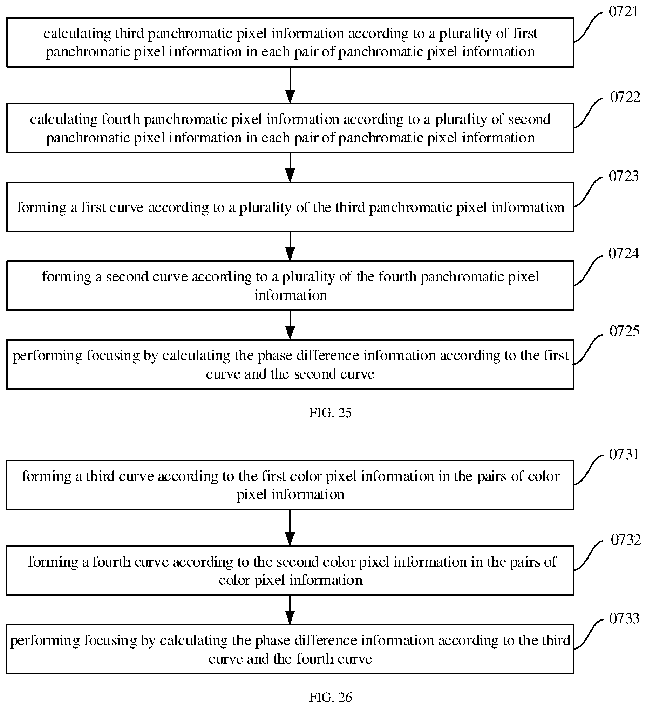

Referring to FIG. 25, in some embodiments, the panchromatic pixel information includes first panchromatic pixel information and second panchromatic pixel information. The first panchromatic pixel information and the second panchromatic pixel information are respectively output by panchromatic pixels located in a first orientation of the lens 170 (shown in FIG. 2) and panchromatic pixels located in a second orientation of the lens 170. A plurality of the first panchromatic pixel information and a corresponding plurality of the second panchromatic pixel information serve as a pair of panchromatic pixel information. The performing focusing by calculating a phase difference according to the panchromatic pixel information includes:
At block 0721: calculating third panchromatic pixel information according to a plurality of first panchromatic pixel information in each pair of panchromatic pixel information;
At block 0722: calculating fourth panchromatic pixel information according to a plurality of second panchromatic pixel information in each pair of panchromatic pixel information;
At block 0723: forming a first curve according to a plurality of the third panchromatic pixel information;
At block 0724: forming a second curve according to a plurality of the fourth panchromatic pixel information; and
At block 0725: performing focusing by calculating the phase difference information according to the first curve and the second curve.

Referring to FIG. 20 again, in some embodiments, Step 0721, Step 0722, Step 0723, Step 0724, and Step 0725 may all be implemented by the processing chip 20. That is, the processing chip 20 may be configured to calculate the third panchromatic pixel information according to the multiple first panchromatic pixel information in each pair of panchromatic pixel information, and to calculate the fourth panchromatic pixel information according to the multiple second panchromatic pixel information in each pair of panchromatic pixel information. The processing chip 20 may be further configured to form the first curve according to the plurality of third panchromatic pixel information, form the second curve according to the plurality of fourth panchromatic pixel information, and calculate the phase difference information according to the first curve and the second curve to perform focusing.

Specifically, referring to FIG. 23 again, in an example, an xy coordinate system is established with the center of each lens 170 as an origin. Apart of the lens 170 located in the second quadrant belongs to the first orientation P1, and a part of the lens 170 located in the fourth quadrant belongs to the second orientation P2. Corresponding to each sub-unit of the pixel array 11 in FIG. 23, one panchromatic pixel W is located in the first orientation P1 of the lens 170, and the other panchromatic pixel W is located in the second orientation P2 of the lens 170. The first panchromatic pixel information is output by the panchromatic pixels W in the first orientation P1 of the lens 170, and the second panchromatic pixel information is output by the panchromatic pixels W in the second orientation P2 of the lens 170. For example, panchromatic pixels W11, W13, W15, W17, W31, W33, W35, W37, W51, W53, W55, W57, W71, W73, W75, W77 are located in the first orientation P1, and panchromatic pixels W22, W24, W26, W28, W42, W44, W46, W48, W62, W64, W66, W68, W82, W84, W86, W88 are located in the second orientation P2. The panchromatic pixels located in the first direction P1 and the panchromatic pixels located in the second orientation P2 form a pair of panchromatic pixels. Correspondingly, multiple first panchromatic pixel information and corresponding multiple second panchromatic pixel information serve as a pair of panchromatic pixel information. For example, multiple first panchromatic pixel information in a same smallest repeating unit and multiple second panchromatic pixel information in the smallest repeating unit serve as a pair of panchromatic pixel information. That is, the panchromatic pixel information of the panchromatic pixels W11, W13, W31, W33 and the panchromatic pixel information of the panchromatic pixels W22, W24, W42, W44 form a pair of panchromatic pixel information. The panchromatic pixel information of the panchromatic pixels W15, W17, W35, W37 and the panchromatic pixel information of the panchromatic pixels W26, W28, W46, W48 form a pair of panchromatic pixel information. The panchromatic pixel information of the panchromatic pixels W51, W53, W71, W73 and the panchromatic pixel information of the panchromatic pixels W62, W64, W82, W84 forms a pair of panchromatic pixel information. The panchromatic pixel information of the panchromatic pixels W55, W57, W75, W77 and the panchromatic pixel information of the panchromatic pixels W66, W68, W86, W88 form a pair of panchromatic pixel information.

Referring to FIG. 24 again, in another example, an xy coordinate system is established with the center of each lens 170 as an origin. A part of the lens 170 located in the second quadrant belongs to the first orientation P1, and a part of the lens 170 located in the third quadrant belongs to the second orientation P2. Corresponding to each sub-unit of the pixel array 11 in FIG. 24, one panchromatic pixel W is located at the first orientation P1 of the lens 170, and the other panchromatic pixel W is located at the second orientation P2 of the lens 170. The first panchromatic pixel information is output by the panchromatic pixels W in the first orientation P1 of the lens 170, and the second panchromatic pixel information is output by the panchromatic pixels W in the second orientation P2 of the lens 170. For example, panchromatic pixels W11, W13, W15, W17, W31, W33, W35, W37, W51, W53, W55, W57, W71, W73, W75, W77 are located in the first direction P1, and panchromatic pixels W21, W23, W25, W27, W41, W43, W45, W47, W61, W63, W65, W67, W81, W83, W85, W87 are located in the second direction P2. The panchromatic pixels located in the first direction P1 and the panchromatic pixels located in the second orientation P2 form a pair of panchromatic pixels. Correspondingly, multiple first panchromatic pixel information and corresponding multiple second panchromatic pixels information serve as a pair of panchromatic pixel information. For example, multiple first panchromatic pixel information in a same smallest repeating unit and multiple second panchromatic pixel information in the smallest repeating unit serve as a pair of panchromatic pixel information. That is, the panchromatic pixel information of the panchromatic pixels W11, W13, W31, W33 and the panchromatic pixel information of the panchromatic pixels W21, W23, W41, and W43 form a pair of panchromatic pixel information. The panchromatic pixel information of the panchromatic pixels W15, W17, W35, W37 and the panchromatic pixel information of the panchromatic pixels W25, W27, W45, W47 form a pair of panchromatic pixel information. The panchromatic pixel information of the panchromatic pixels W51, W53, W71, W73 and the panchromatic pixel information of the panchromatic pixels W61, W63, W81, W83 form a pair of panchromatic pixel information. The panchromatic pixel information of the panchromatic pixels W55, W57, W75, W77 and the panchromatic pixel information of the panchromatic pixels W65, W67, W85, W87 form a pair of panchromatic pixels information.

After obtaining multiple pairs of panchromatic pixel information, the processing chip 20 calculates the third panchromatic pixel information according to the multiple first panchromatic pixel information in each pair of panchromatic pixel information, and calculates the fourth panchromatic pixel information according to the multiple second panchromatic pixel information in each pair of panchromatic pixel information. For example, for the pair of panchromatic pixel information composed of the panchromatic pixel information of panchromatic pixels W11, W13, W31, W33 and panchromatic pixels W22, W24, W42, W44, the calculation method of the third panchromatic pixel information may be: LT=(W11+W13+W31+W33)/4, and the calculation method of the fourth panchromatic pixel information may be: RB=(W22+W24+W42+W44)/4. The calculation methods of the third panchromatic pixel information and the fourth panchromatic pixel information of the remaining pairs of panchromatic pixel information are similar to this and will not be repeated here. In this way, the processing chip 20 may obtain multiple third panchromatic pixel information and multiple fourth panchromatic pixel information. A plurality of third panchromatic pixel information may depict one histogram curve (i.e., a first curve), and a plurality of fourth panchromatic pixel information may depict another histogram curve (i.e., a second curve). Subsequently, the processing chip 20 may calculate the phase difference information according to the two histogram curves. Subsequently, the processing chip 20 can determine the distance the camera 30 required to move according to the phase difference information and pre-calibrated parameters. Subsequently, the processing chip 20 may control the camera 30 to move the distance required to move such that the camera 30 is in focus.

Referring to FIG. 26, in some embodiments, the color pixel information includes first color pixel information and second color pixel information. The first color pixel information and the second color pixel information are respectively output by the color pixels located in the third orientation of the lens 170 (shown in FIG. 2) and the color pixels located in the fourth orientation of the lens 170. One of the first color pixel information and a corresponding second color pixel information serve as a pair of color pixel information. The performing focusing by calculating the phase difference according to the color pixel information includes:
At block 0731: forming a third curve according to the first color pixel information in the pairs of color pixel information;
At block 0732: forming a fourth curve according to the second color pixel information in the pairs of color pixel information; and
At block 0733: performing focusing by calculating the phase difference information according to the third curve and the fourth curve.

Referring to FIG. 20 again, in some embodiments, Step 0731, Step 0732, and Step 0733 may all be implemented by the processing chip 20. That is, the processing chip 20 may be configured to form the third curve according to the first color pixel information in the multiple pairs of color pixel information, form the fourth curve according to the second color pixel information in the multiple pairs of color pixel information, and calculate the phase difference information according to the third curve and the fourth curve for focusing.

Specifically, referring to FIG. 23, in an example, an xy coordinate system is established with the center of each lens 170 as an origin. A part of the lens 170 located in the first quadrant belongs to the third orientation P3, and a part of the lens 170 located in the third quadrant belongs to the fourth orientation P4. Corresponding to each sub-unit of the pixel array 11 in FIG. 23, one color pixel is located in the third orientation P3 of the lens 170, and the other color pixel is located in the fourth orientation P4 of the lens 170. The first color pixel information is output by the color pixels located in the third orientation P3 of the lens 170, and the second color pixel information is output by the color pixels located in the fourth orientation P4 of the lens 170. For example, color pixels A12, B14, A16, B18, B32, C34, B36, C38, A52, B54, A56, B58, B72, C74, B76, C78 are located in the third orientation P3, and color pixels A21, B23, A25, B27, B41, C43, B45, C47, A61, B63, A65, B67, B81, C83, B85, C87 are located in the fourth direction P4. The color pixels in the same sub-unit form a pair of color pixels. Correspondingly, the color pixel information of the color pixels in the same sub-unit forms a pair of color pixel information. For example, the color pixel information of the color pixel A12 and the color pixel information of the color pixel A21 form a pair of color pixel information. The color pixel information of the color pixel B14 and the color pixel information of the color pixel B23 form a pair of color pixel information. The color pixel information of the color pixel A16 and the color pixel information of the color pixel A25 form a pair of color pixel information. The color pixel information of the color pixel B 18 and the color pixel information of the color pixel B27 form a pair of color pixel information, and so on.

Referring to FIG. 24, in another example, an xy coordinate system is established with the center of each lens 170 as an origin. A part of the lens 170 located in the first quadrant belongs to the third orientation P3, and a part of the lens 170 located in the fourth quadrant belongs to the fourth orientation P4. Corresponding to each sub-unit of the pixel array 11 in FIG. 24, one color pixel is located in the third orientation P3 of the lens 170, and the other color pixel is located in the fourth orientation P4 of the lens 170. The first color pixel information is output by the color pixels located in the third orientation P3 of the lens 170, and the second color pixel information is output by the color pixels located in the fourth orientation P4 of the lens 170. For example, color pixels A12, B14, A16, B18, B32, C34, B36, C38, A52, B54, A56, B58, B72, C74, B76, C78 are located in the third orientation P3, and color pixels A22, B24, A26, B28, B42, C44, B46, C48, A62, B64, A66, B68, B82, C84, B86, C88 are located in the fourth orientation P4. The color pixels in the same sub-unit form a pair of color pixels. Correspondingly, the color pixel information of the color pixels in the same sub-unit forms a pair of color pixel information. For example, the color pixel information of the color pixel A12 and the color pixel information of the color pixel A22 form a pair of color pixel information. The color pixel information of the color pixel B14 and the color pixel information of the color pixel B24 form a pair of color pixel information. The color pixel information of the color pixel A16 and the color pixel information of the color pixel A26 form a pair of color pixel information. The color pixel information of the color pixel B 18 and the color pixel information of the color pixel B28 form a pair of color pixel information, and so on.

After obtaining multiple pairs of color pixel information, the processing chip 20 forms the third curve according to the first color pixel information in the multiple pairs of color pixel information, forms the fourth curve according to the second color pixel information in the multiple pairs of color pixel information, and calculates the phase difference information according to the third curve and the fourth curve. For example, a plurality of first color pixel information may depict one histogram curve (i.e., a third curve), and a plurality of second color pixel information may depict another histogram curve (i.e., a fourth curve). Subsequently, the processing chip 20 may calculate the phase difference information between the two histogram curves according to the positions of the peaks of the two histogram curves. Subsequently, the processing chip 20 may determine the distance that the camera 30 is required to move according to the phase difference information and pre-calibrated parameters. Subsequently, the processing chip 20 may control the camera 30 to move the distance required to move such that the camera 30 is in focus.

In the two-dimensional pixel array 11 shown in FIG. 24, the pairs of color pixel are arranged in the vertical direction. In a case that phase focusing is performed based on this arrangement, when a scene containing a large number of pure vertical stripes is to be handled, the difference between the peak value of the third curve and the peak value of the fourth curve may be small, resulting in the calculated phase difference information not being accurate enough, and further affecting the accuracy of focusing. In the two-dimensional pixel array 11 shown in FIG. 23, the pairs of color pixel are arranged diagonally. When phase focusing is performed based on this arrangement, whether it is a scene containing a large number of pure vertical stripes or a scene containing a large number of pure horizontal stripes, the difference between the peak value of the third curve and the peak value of the fourth curve is not too small, and the calculated phase difference information is more accurate, which can improve the accuracy of focusing.

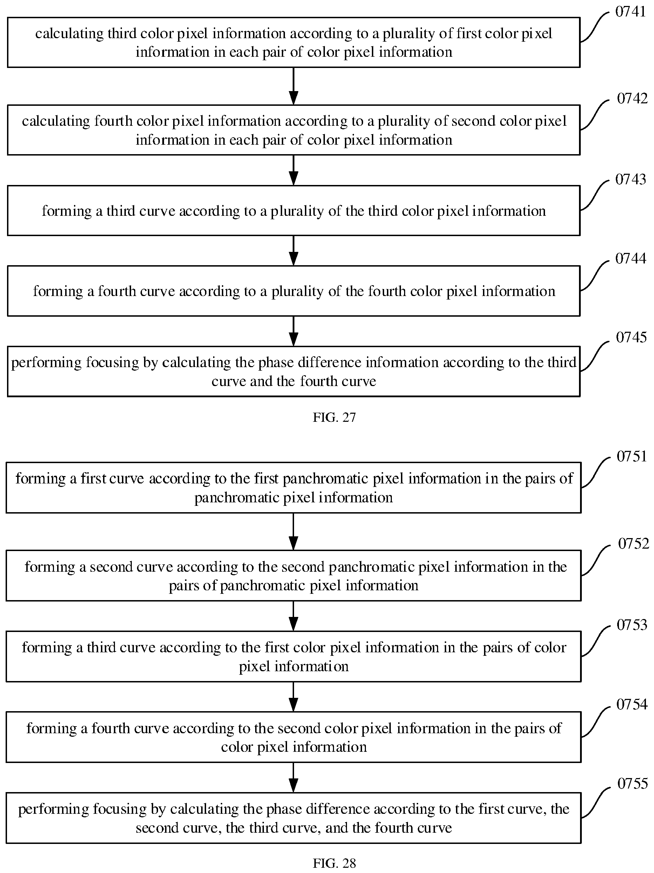

Referring to FIG. 27, in some embodiments, the color pixel information includes first color pixel information and second color pixel information. The first color pixel information and the second color pixel information are respectively output by the color pixels located in a third orientation of the lens 170 (shown in FIG. 2) and the color pixels located in a fourth orientation of the lens 170. A plurality of first color pixel information and a corresponding plurality of the second color pixel information form a pair of color pixel information. The performing focusing by calculating the phase difference according to the color pixel information includes:
At block 0741: calculating third color pixel information according to a plurality of first color pixel information in each pair of color pixel information;
At block 0742: calculating fourth color pixel information according to a plurality of second color pixel information in each pair of color pixel information;
At block 0743: forming a third curve according to a plurality of the third color pixel information;
At block 0744: forming a fourth curve according to a plurality of the fourth color pixel information; and
At block 0745: performing focusing by calculating the phase difference information according to the third curve and the fourth curve.

Referring to FIG. 20 again, in some embodiments, Step 0741, Step 0742, Step 0743, Step 0744, and Step 0745 may all be implemented by the processing chip 20. That is, the processing chip 20 may be configured to calculate the third color pixel information according to the multiple first color pixel information in each pair of color pixel information, and to calculate the fourth color pixel information according to the multiple second color pixel information in each pair of color pixel information pairs. The processing chip 20 may be further configured to form the third curve according to the plurality of third color pixel information, form the fourth curve according to the plurality of fourth color pixel information, and calculate the phase difference information according to the third curve and the fourth curve to perform focusing.

Specifically, referring to FIG. 23 again, in an example, an xy coordinate system is established with the center of each lens 170 as an origin. A part of the lens 170 located in the first quadrant belongs to the third orientation P3, and a part of the lens 170 located in the third quadrant belongs to the fourth orientation P4. Corresponding to each sub-unit of the pixel array 11 in FIG. 23, one color pixel is located in the third orientation P3 of the lens 170, and the other color pixel is located in the fourth orientation P4 of the lens 170. The first color pixel information is output by the color pixels located in the third orientation P3 of the lens 170, and the second color pixel information is output by the color pixels located in the fourth orientation P4 of the lens 170. For example, color pixels A12, B14, A16, B16, B32, C34, B36, C38, A52, B54, A56, B58, B72, C74, B76, C78 are located in the third orientation P3, and color pixels A21, B23, A25, B27, B41, C43, B45, C47, A61, B63, A65, B67, B81, C83, B85, C87 are located in the fourth direction P4. The color pixels located in the third orientation P3 and the color pixels located in the fourth orientation P4 form a pair of color pixel. Correspondingly, multiple first color pixel information and multiple corresponding second color pixel information serve as a pair of color pixel information. For example, multiple first color pixel information in a same smallest repeating unit and multiple second color pixel information in the smallest repeating unit serve as a pair of color pixel information. That is, the color pixel information of the color pixels A12, B14, B32, C34 and the color pixel information of the color pixels A21, B23, B41, C43 form a pair of color pixel information. The color pixel information of the color pixels A16, B 18, B36, C38 and the color pixel information of the color pixels A25, B27, B45, C47 form a pair of color pixel information. The color pixel information of the color pixels A52, B54, B72, C74 and the color pixel information of the color pixels A61, B63, B81, C83 form a pair of color pixel information. The color pixel information of the color pixels A56, B58, B76, C78 and the color pixel information of the color pixels A65, B67, B85, C87 form a pair of color pixel information.

Referring to FIG. 24 again, in another example, an xy coordinate system is established with the center of each lens 170 as an origin. A part of the lens 170 located in the first quadrant belongs to the third orientation P3, and a part of the lens 170 located in the fourth quadrant belongs to the fourth orientation P4. Corresponding to each sub-unit of the pixel array 11 in FIG. 24, one color pixel is located in the third orientation P3 of the lens 170, and the other color pixel is located in the fourth orientation P4 of the lens 170. The first color pixel information is output by the color pixels located in the third orientation P3 of the lens 170, and the second color pixel information is output by the color pixels located in the fourth orientation P4 of the lens 170. For example, color pixels A12, B14, A16, B18, B32, C34, B36, C38, A52, B54, A56, B58, B72, C74, B76, C78 are located in the third orientation P3, and color pixels A22, B24, A26, B28, B42, C44, B46, C48, A62, B64, A66, B68, B82, C84, B86, C88 are located in the fourth orientation P4. The color pixels located in the third orientation P3 and the color pixels located in the fourth orientation P4 form a pair of color pixel. Correspondingly, multiple first color pixel information and multiple corresponding second color pixel information serve as a pair of color pixel information. For example, multiple first color pixel information in a same smallest repeating unit and multiple second color pixel information in the smallest repeating unit serve as a pair of color pixel information. That is, the color pixel information of the color pixels A12, B14, B32, C34 and the color pixel information of the color pixels A22, B24, B42, C44 form a pair of color pixel information. The color pixel information of the color pixels A16, B18, B36, C38 and the color pixel information of the color pixels A26, B28, B46, C48 form a pair of color pixel information. The color pixel information of the color pixels A52, B54, B72, C74 and the color pixel information of the color pixels A62, B64, B82, C84 form a pair of color pixel information. The color pixel information of the color pixels A56, B58 B76, C78 and the color pixel information of the color pixels A66, B68, B86, C88 form a pair of color pixel information.

After obtaining multiple pairs of color pixel information, the processing chip 20 calculates the third color pixel information according to the multiple first color pixel information in each pair of color pixel information, and calculates the fourth color pixel information according to the multiple second color pixel information in each pair of color pixel information. For example, for the pair of color pixel information composed of the color pixel information of color pixels A12, B14, B32, C34 and color pixel information of color pixels A21, B23, B41, C43, the calculation method of the third color pixel information may be: RT =a^{∗}A12+b&(B14+B32)+c^{∗}C34, and the calculation method of the fourth panchromatic pixel information may be: LB=a^{∗}A21+b&(B23+B41)+c^{∗}C43, where a, b, c is the weight coefficient calibrated in advance. The calculation methods of the third color pixel information and the fourth color pixel information of the remaining pairs of color pixel information are similar to this and will not be repeated here. In this way, the processing chip 20 may obtain multiple third color pixel information and multiple fourth color pixel information. A plurality of third color pixel information may depict one histogram curve (i.e., a third curve), and a plurality of fourth color pixel information may depict another histogram curve (i.e., a fourth curve). Subsequently, the processing chip 20 may calculate the phase difference information according to the two histogram curves. Subsequently, the processing chip 20 may determine the distance the camera 30 required to move according to the phase difference information and pre-calibrated parameters. Subsequently, the processing chip 20 may control the camera 30 to move the distance required to move such that the camera 30 is in focus.

Referring to FIG. 28, in some embodiments, the panchromatic pixel information includes first panchromatic pixel information and second panchromatic pixel information, and the color pixel information includes first color pixel information and second color pixel information. The first panchromatic pixel information, the second panchromatic pixel information, the first color pixel information, and the second color pixel information are respectively output by the panchromatic pixels located in the first orientation of the lens 170 (shown in FIG. 2), the panchromatic pixels located in the second orientation of the lens 170 (shown in FIG. 2), the color pixels located in the third orientation of the lens 170, and the color pixels located in the fourth orientation of the lens 170. One of the first panchromatic pixel information and a corresponding second panchromatic pixel information serve as a pair of panchromatic pixel information, and one of the first color pixel information and a corresponding second color pixel information serve as a pair of color pixel information. The performing focusing by calculating the phase difference according to the panchromatic pixel information and the color pixel information includes:
At block 0751: forming a first curve according to the first panchromatic pixel information in the pairs of panchromatic pixel information;
At block 0752: forming a second curve according to the second panchromatic pixel information in the pairs of panchromatic pixel information;
At block 0753: forming a third curve according to the first color pixel information in the pairs of color pixel information;
At block 0754: forming a fourth curve according to the second color pixel information in the pairs of color pixel information; and
At block 0755: performing focusing by calculating the phase difference according to the first curve, the second curve, the third curve, and the fourth curve.

Referring to FIG. 20 again, in some embodiments, Step 0751, Step 0752, Step 0753, Step 0754, and Step 0755 may all be implemented by the processing chip 20. That is, the processing chip 20 may be configured to form the first curve based on the first panchromatic pixel information in the multiple pairs of panchromatic pixel information, and form the second curve based on the second panchromatic pixel information in the multiple pairs of panchromatic pixel information. The processing chip 20 may further be configured to form the third curve according to the first color pixel information in the multiple pairs of color pixel information, and form the fourth curve according to the second color pixel information in the multiple pairs of color pixel information. The processing chip 20 may further be configured to calculate the phase difference according to the first curve, the second curve, the third curve, and the fourth curve to perform focusing.

Among them, the first orientation, the second orientation, the third orientation, and the fourth orientation are the same as the first orientation P1, the second orientation P2, the third orientation P3, and the fourth orientation P4 in the control method in the embodiments shown in FIG. 22 and FIG. 26, which will not be repeated herein. The pair of panchromatic pixel information and the pair of color pixel information have the same meaning as the pair of panchromatic pixel information and the pair of color pixel information in the control method in the embodiments shown in FIG. 22 and FIG. 26, which will not be repeated herein.

After obtaining multiple pairs of panchromatic pixel information and multiple pairs of color pixel information, the processing chip 20 may form the first curve according to the first panchromatic pixel information in the multiple pairs of panchromatic pixel information, may also form the second curve according to the second panchromatic pixel information in the multiple pairs of panchromatic pixel information, may also form the third curve according to the first color pixel information in the multiple pairs of color pixel information, and may also form the fourth curve according to the second color pixel information in the multiple pairs of color pixel information. Subsequently, the processing chip 20 may calculate a first phase difference information according to the first curve and the second curve, calculate a second phase difference information according to the third curve and the fourth curve, and obtain a final phase difference information according to the first phase difference information and the second phase difference information. In one example, the processing chip 20 may calculate an average value of the first phase difference information and the second phase difference information and take the average value as the final phase difference information; in another example, the processing chip 20 may assign a first weight to the first phase difference information and a second weight to the second phase difference information, where the first weight is not equal to the second weight, and the processing chip 20 may calculate the final phase difference information according to the first phase difference information, the first weight, the second phase difference information, and the second weight. Subsequently, the processing chip 20 may determine the distance that the camera 30 is required to move according to the final phase difference information and pre-calibrated parameters. Subsequently, the processing chip 20 may control the camera 30 to move the distance required to move such that the camera 30 is in focus.

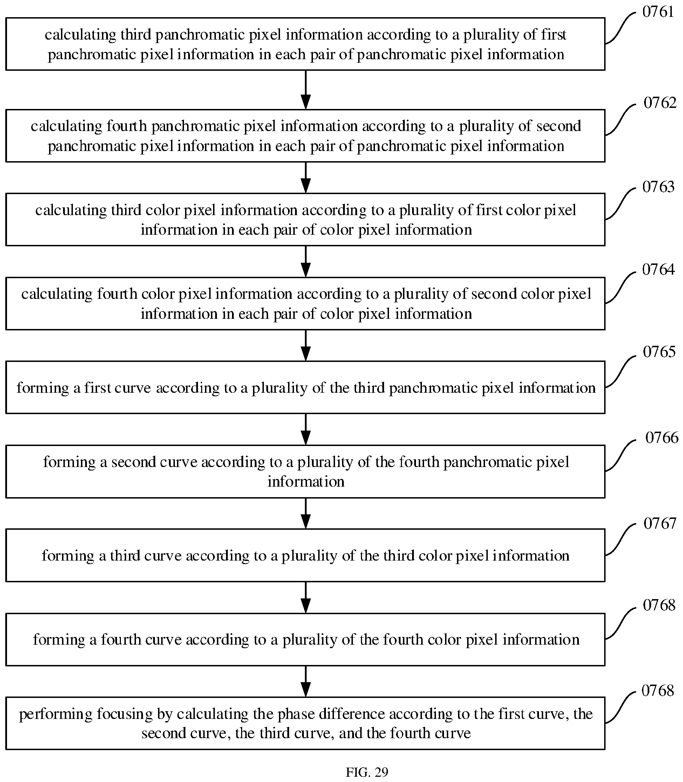

Referring to FIG. 29, in some embodiments, the panchromatic pixel information includes first panchromatic pixel information and second panchromatic pixel information, and the color pixel information includes first color pixel information and second color pixel information. The first panchromatic pixel information, the second panchromatic pixel information, the first color pixel information, and the second color pixel information are respectively output by the panchromatic pixels located in the first orientation of the lens 170 (shown in FIG. 2), the panchromatic pixels located in the second orientation of the lens 170 (shown in FIG. 2), the color pixels located in the third orientation of the lens 170, and the color pixels located in the fourth orientation of the lens 170. A plurality of the first panchromatic pixel information and a corresponding plurality of the second panchromatic pixel information serve as a pair of panchromatic pixel information, and a plurality of the first color pixel information and a corresponding plurality of the second color pixel information serve as a pair of color pixel information. The performing focusing by calculating the phase difference according to the panchromatic pixel information and the color pixel information includes:
At block 0761: calculating third panchromatic pixel information according to a plurality of first panchromatic pixel information in each pair of panchromatic pixel information;
At block 0762: calculating fourth panchromatic pixel information according to a plurality of second panchromatic pixel information in each pair of panchromatic pixel information;
At block 0763: calculating third color pixel information according to a plurality of first color pixel information in each pair of color pixel information;
At block 0764: calculating fourth color pixel information according to a plurality of second color pixel information in each pair of color pixel information;
At block 0765: forming a first curve according to a plurality of the third panchromatic pixel information;
At block 0766: forming a second curve according to a plurality of the fourth panchromatic pixel information;
At block 0767: forming a third curve according to a plurality of the third color pixel information;
At block 0768: forming a fourth curve according to a plurality of the fourth color pixel information; and
At block 0769: performing focusing by calculating the phase difference according to the first curve, the second curve, the third curve, and the fourth curve.

Referring to FIG. 20 again, in some embodiments, Step 0761, Step 0762, Step 0763, Step 0764, Step 0765, Step 0766, Step 0767, Step 0768, and Step 0769 may all be implemented by the processing chip 20. That is, the processing chip 20 may be configured to calculate the third panchromatic pixel information according to the multiple first panchromatic pixel information in each pair of panchromatic pixel information, calculate the fourth panchromatic pixel information according to the multiple second panchromatic pixel information in each pair of panchromatic pixel information, calculate the third color pixel information according to the multiple first color pixel information in each pair of color pixel information, and calculate the fourth color pixel information according to the multiple second color pixel information in each pair of color pixel information. The processing chip 20 may be further configured to form the first curve according to the plurality of third panchromatic pixel information, the second curve according to the plurality of fourth panchromatic pixel information, the third curve according to the plurality of third color pixel information, and the fourth curve according to the plurality of fourth color pixel information. The processing chip 20 may be further configured to calculate the phase difference according to the first curve, the second curve, the third curve, and the fourth curve to perform focusing.

Among them, the first orientation, the second orientation, the third orientation, and the fourth orientation are the same as the first orientation P1, the second orientation P2, the third orientation P3, and the fourth orientation P4 in the control method in the embodiments shown in FIG. 25 and FIG. 27, which will not be repeated herein. The pair of panchromatic pixel information and the pair of color pixel information have the same meaning as the pair of panchromatic pixel information and the pair of color pixel information in the control method in the embodiments shown in FIG. 25 and FIG. 27, which will not be repeated herein. The calculation methods of the third panchromatic pixel information and the fourth panchromatic pixel information are the same as the calculation methods of the third panchromatic pixel information and the fourth panchromatic pixel information in the control method in the embodiments shown in FIG. 25, which will not be repeated herein. The calculation methods of the third color pixel information and the fourth color pixel information are the same as the calculation methods of the third color pixel information and the fourth color pixel information in the control method in the embodiments shown in FIG. 27, which will not be repeated herein.

After obtaining multiple third panchromatic pixel information, multiple fourth panchromatic pixel information, multiple third color pixel information, and multiple fourth color pixel information, the processing chip 20 may form the first curve according to the multiple third panchromatic pixel information, form the second curve according to the multiple fourth panchromatic pixel information, form the third curve according to the multiple third color pixel information, and form the fourth curve according to the multiple fourth color pixel information. Subsequently, the processing chip 20 may calculate a first phase difference information according to the first curve and the second curve, calculate a second phase difference information according to the third curve and the fourth curve, and obtain a final phase difference information according to the first phase difference information and the second phase difference information. In one example, the processing chip 20 may calculate an average value of the first phase difference information and the second phase difference information and take the average value as the final phase difference information; in another example, the processing chip 20 may assign a first weight to the first phase difference information and a second weight to the second phase difference information, where the first weight is not equal to the second weight, and the processing chip 20 may calculate the final phase difference information according to the first phase difference information, the first weight, the second phase difference information, and the second weight. Subsequently, the processing chip 20 may determine the distance that the camera 30 is required to move according to the final phase difference information and pre-calibrated parameters. Subsequently, the processing chip 20 may control the camera 30 to move the distance required to move such that the camera 30 is in focus.

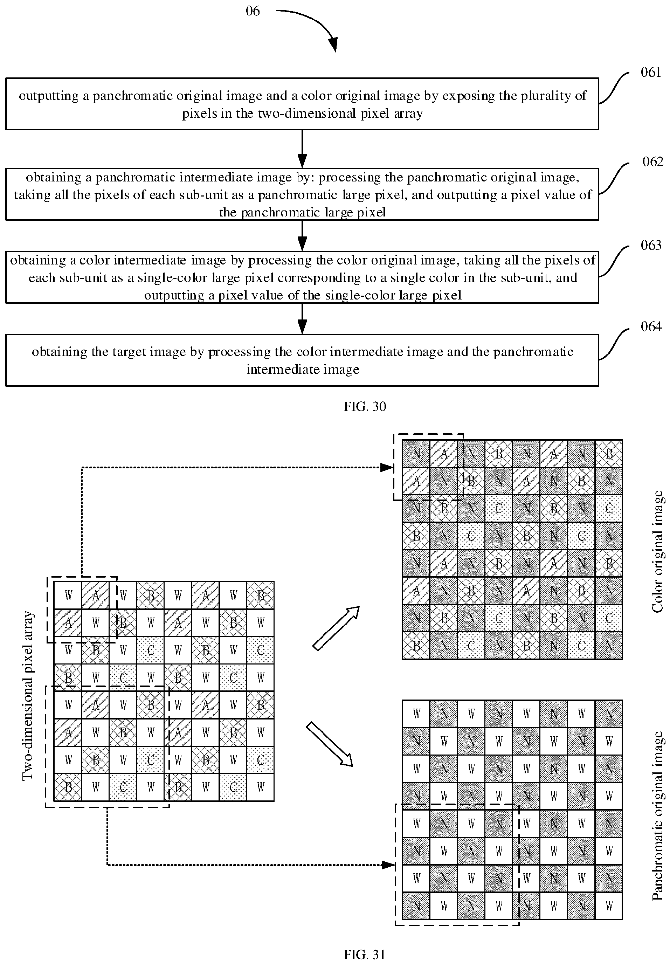

Referring to FIGS. 2 and 30, in some embodiments, the obtaining a target image by exposing a plurality of pixels 101 in a two-dimensional pixel array 11 includes:
At block 061: outputting a panchromatic original image and a color original image by exposing the plurality of pixels 101 in the two-dimensional pixel array 11;
At block 062: obtaining a panchromatic intermediate image by: processing the panchromatic original image, taking all the pixels 101 of each sub-unit as a panchromatic large pixel, and outputting a pixel value of the panchromatic large pixel;
At block 063: obtaining a color intermediate image by processing the color original image, taking all the pixels 101 of each sub-unit as a single-color large pixel corresponding to a single color in the sub-unit, and outputting a pixel value of the single-color large pixel;
At block 064: obtaining the target image by processing the color intermediate image and the panchromatic intermediate image.

Referring to FIG. 2 and FIG. 20, in some embodiments, Step 061 may be implemented by the image sensor 10. Step 062, Step 063, and Step 064 may all be implemented by the processing chip 20. That is, the plurality of pixels 101 in the two-dimensional pixel array 11 of the image sensor 10 are exposed to output the panchromatic original image and the color original image. The processing chip 20 may be configured to process the panchromatic original image, take all pixels 101 of each sub-unit as a panchromatic large pixel, and output the pixel value of the panchromatic large pixel to obtain the panchromatic intermediate image. The processing chip 20 may be further configured to process the color original image, take all the pixels 101 of each sub-unit as a single-color large pixel corresponding to a single color in the sub-unit, and output the pixel value of the single-color large pixel to obtain the color intermediate image. The processing chip 2 may be further configured to process the color intermediate image and the panchromatic intermediate image to obtain the target image.

Specifically, referring to FIG. 31, a frame of panchromatic original image is output after multiple panchromatic pixels are exposed, and a frame of color original image is output after multiple color pixels are exposed.

The panchromatic original image includes a plurality of panchromatic pixels W and a plurality of empty pixels N (NULL). The empty pixels are neither panchromatic pixels nor color pixels. The position of the empty pixel N in the panchromatic original image may be considered as no pixel at that position, or the pixel value of the empty pixel may be considered as zero. Comparing the two-dimensional pixel array 11 with the panchromatic original image, it can be seen that for each sub-unit in the two-dimensional pixel array, the sub-unit includes two panchromatic pixels W and two color pixels (color pixel A, color pixel B, or color pixel C). The panchromatic original image also has a sub-unit corresponding to each sub-unit in the two-dimensional pixel array 11. The sub-unit of the panchromatic original image includes two panchromatic pixels W and two empty pixels N. The positions of the two empty pixels N correspond to the positions of the two color pixels in the sub-unit of the two-dimensional pixel array 11.

Similarly, the color original image includes a plurality of color pixels and a plurality of empty pixels N. The empty pixels are neither panchromatic pixels nor color pixels. The position of the empty pixel N in the color original image may be considered as no pixel at that position, or the pixel value of the empty pixel may be considered as zero. Comparing the two-dimensional pixel array 11 with the color original image, it can be seen that for each sub-unit in the two-dimensional pixel array 11, the sub-unit includes two panchromatic pixels W and two color pixels. The color original image also has a sub-unit corresponding to each sub-unit in the two-dimensional pixel array 11. The sub-unit of the color original image includes two color pixels and two empty pixels N. The positions of the two empty pixels N correspond to the positions of the two color pixels in the sub-unit of the two-dimensional pixel array 11.

After the processing chip 20 receives the panchromatic original image and the color original image output by the image sensor 10, the processing chip 20 may further process the panchromatic original image to obtain a panchromatic intermediate image, and further process the color original image to obtain a color intermediate image.

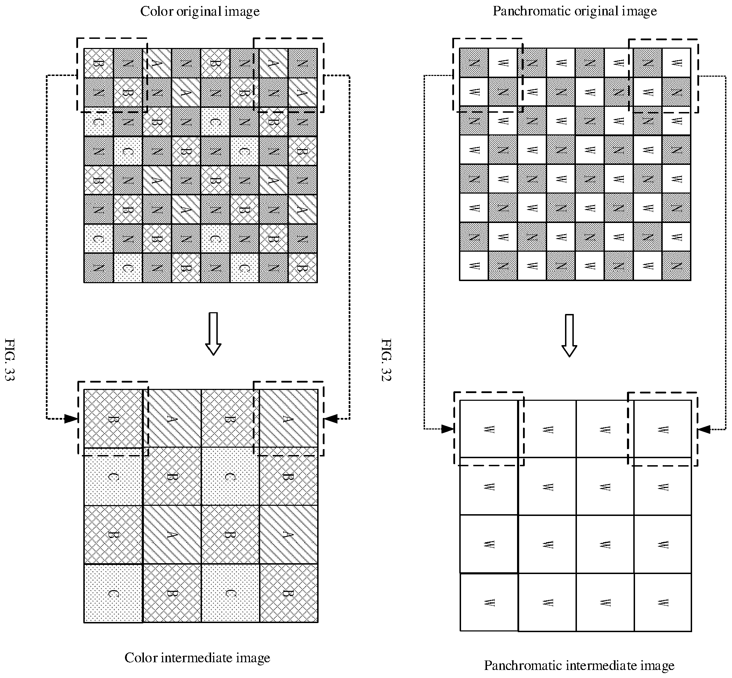

For example, the panchromatic original image may be transformed into a panchromatic intermediate image in a manner shown in FIG. 32. As shown in FIG. 32, the panchromatic original image includes a plurality of sub-units, and each sub-unit includes two empty pixels N and two panchromatic pixels W. The processing chip 20 may take all pixels in each sub-unit including the empty pixels N and the panchromatic pixels W as a panchromatic large pixel W corresponding to the sub-unit. In this way, the processing chip 20 may form the panchromatic intermediate image according to the plurality of panchromatic large pixels W. As an example, the processing chip 20 may take all the pixels of each sub-unit in the panchromatic original image as the panchromatic large pixel W corresponding to the sub-unit in the following manner: the processing chip 20 first combines the pixel values of all pixels in each sub-cell to obtain the pixel values of the panchromatic large pixel W, and forms a panchromatic intermediate image according to the pixel values of the panchromatic large pixels W. Specifically, for each panchromatic large pixel, the processing chip 20 may add all the pixel values in the sub-unit including the empty pixel N and the panchromatic pixel W, and take the result of the addition as the pixel value of the panchromatic large pixel W corresponding to the sub-unit, where the pixel value of the empty pixel N may be regarded as zero. In this way, the processing chip 20 may obtain the pixel values of the panchromatic large pixels W.

For example, the color original image may be transformed into a color intermediate image in a manner shown in FIG. 33. As shown in FIG. 33, the color original image includes a plurality of sub-units, and each sub-unit includes a plurality of empty pixels N and a plurality of single-color pixels. Specifically, some sub-units include two empty pixels N and two single-color pixels A, some sub-units include two empty pixels N and two single-color pixels B, and some sub-units include two empty pixels N and two single-color pixels C. The processing chip 20 may take all pixels in a sub-unit including the empty pixel N and the single-color pixel A as a single-color large pixel A corresponding to the single-color A in the sub-unit, take all pixels in a sub-unit including the empty pixel N and the single-color pixel B as a single-color large pixel B corresponding to the single-color B in the sub-unit, take all pixels in a sub-unit including the empty pixel N and the single-color pixel C as a single-color large pixel C corresponding to the single-color C in the sub-unit. In this way, the processing chip 20 may form the color intermediate image according to the plurality of single-color large pixels A, the plurality of single-color large pixels B, and the plurality of single-color large pixels C. As an example, the processing chip 20 may combine the pixel values of all pixels in each sub-unit to obtain the pixel value of the single-color large pixel, thereby forming a color intermediate image according to the pixel values of the plurality of single-color large pixels. Specifically, for the single-color large pixel A, the processing chip 20 may add the pixel values of all pixels in the sub-unit including the empty pixel N and the single-color pixel A, and take the result of the addition as the pixel value of the single-color large pixel A corresponding to the sub-unit, where the pixel value of the empty pixel N may be regarded as zero, the same below; the processing chip 20 may add the pixel values of all pixels in the sub-unit including the empty pixel N and the single-color pixel B, and take the result of the addition as the pixel value of the single-color large pixel B corresponding to the sub-unit; the processing chip 20 may add the pixel values of all pixels in the sub-unit including the empty pixel N and the single-color pixel C, and take the result of the addition as the pixel value of the single-color large pixel C corresponding to the sub-unit. In this way, the processing chip 20 may obtain the pixel values of multiple single large pixels A, the pixel values of multiple single-color large pixels B, and the pixel values of multiple single-color large pixels C. The processing chip 20 may then form the color intermediate image according to the pixel values of the multiple single-color large pixels A, the pixel values of the multiple single-color large pixels B, and the pixel values of the multiple single-color large pixels C.

After the processing chip 20 obtains the panchromatic intermediate image and the color intermediate image, the processing chip 20 may merge the panchromatic intermediate image and the color intermediate image to obtain the target image.

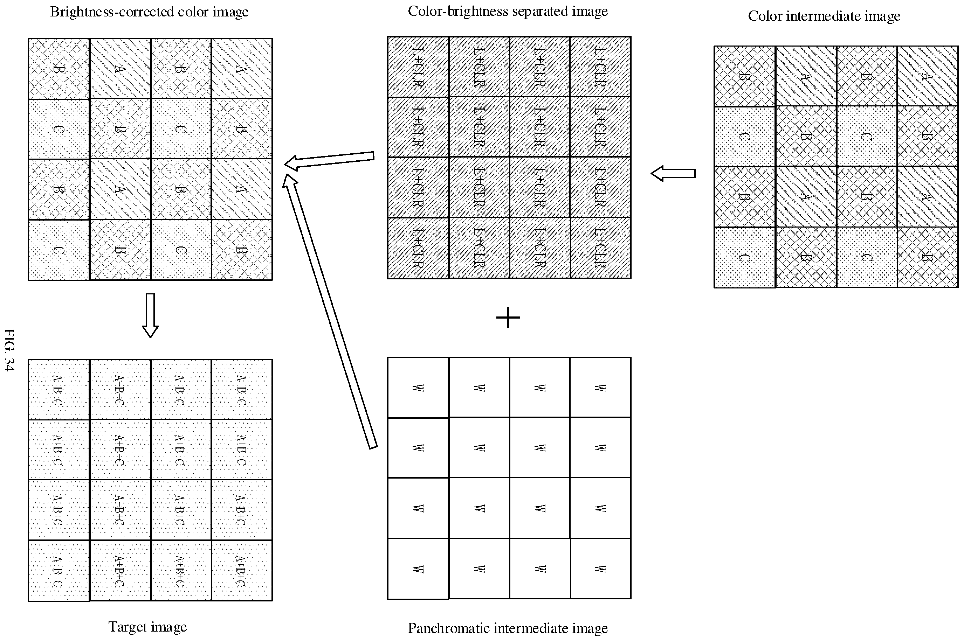

For example, the panchromatic intermediate image and the color intermediate image may be merged in a manner shown in FIG. 34 to obtain the target image. Specifically, the processing chip 20 first separates the color and brightness of the color intermediate image to obtain a color-brightness separated image. In the color-brightness separated image in FIG. 34, L represents brightness, and CLR represents color. Specifically, assuming that the single-color pixel A is a red pixel R, the single-color pixel B is a green pixel G, and the single-color pixel C is a blue pixel Bu, then: (1) the processing chip 20 may convert the color intermediate image in the RGB space into a color-brightness separated image in YCrCb space, where Y in YCrCb is the brightness L in the color-brightness separated image, and Cr and Cb in YCrCb are the color CLRs in the color-brightness separated image; (2) the processing chip 20 may convert the color intermediate image in the RGB space to a color-brightness separated image in Lab space, where L in Lab is the brightness L in the color-brightness separated image, and a and b in Lab are the color CLRs in the color-brightness separated image. It should be noted that L+CLR in the color-brightness separated image shown in FIG. 34 does not mean that the pixel value of each pixel is formed by adding L and CLR, but only that the pixel value of each pixel is composed of L and CLR.

Subsequently, the processing chip 20 merges the brightness of the color-brightness separated image and the brightness of the panchromatic intermediate image. For example, the pixel value of each panchromatic pixel W in the panchromatic intermediate image is the brightness value of each panchromatic pixel, and the processing chip 20 may add the L of each pixel in the color-brightness separated image to the W of the panchromatic pixel at the corresponding position in the panchromatic intermediate image to obtain a brightness-corrected pixel value. The processing chip 20 forms a brightness-corrected color-brightness separated image according to a plurality of the brightness-corrected pixel values, and then applies color space conversion to convert the brightness-corrected color-brightness separated image into a brightness-corrected color image.

Subsequently, the processing chip 20 performs interpolation processing on the brightness-corrected color image to obtain the target image, where the pixel value of each pixel in the target image includes information of three components A, B, and C. It should be noted that A+B+C in the target image in FIG. 34 indicates that the pixel value of each pixel is composed of three color components A, B, and C.

The control method and the camera assembly 40 in the embodiments of the present disclosure obtain a panchromatic original image and a color original image with high definition when the camera 30 is in focus, and use the panchromatic original image to correct the brightness of the color original image, such that the final target image has both high definition and sufficient brightness, and the quality of the target image is better.

In the process of exposing the plurality of pixels 101 in the two-dimensional pixel array 11 to output the panchromatic original image and color original image, the first exposure time of the panchromatic pixels may be controlled by the first exposure control line, and the second exposure time of the color pixels may be controlled by the second exposure control line, such that when the environmental brightness is high (for example, the brightness is greater than or equal to the first predetermined brightness), the first exposure time may be set to be less than the second exposure time. As a result, it is possible to prevent the problem of over-saturation of panchromatic pixels, where the problem may result in the panchromatic original image being unable to be used to correct the brightness of the color original image.

Referring to FIG. 35, the mobile terminal 90 in the embodiments of the present disclosure may be a mobile phone, a tablet computer, a notebook computer, a smart wearable device (such as a smart watch, a smart bracelet, smart glasses, a smart helmet, etc.), a head display device, a virtual reality device, etc., which is not limited herein. The mobile terminal 90 in the embodiments of the present disclosure includes an image sensor 10, a processor 60, a memory 70, and a casing 80. The image sensor 10, the processor 60, and the memory 70 are all arranged in the casing 80. Among them, the image sensor 10 is connected to the processor 60. The processor 60 can perform the same functions as the processing chip 20 in the camera assembly 40 (shown in FIG. 20). That is, the processor 60 can implement the functions that can be implemented by the processing chip 20 described in any one of the above embodiments. The memory 70 is connected to the processor 60, and the memory 70 can store data obtained after processing by the processor 60, such as the target image. The processor 60 and the image sensor 10 may be arranged on a same substrate. In this case, the image sensor 10 and the processor 60 may be regarded as a camera assembly 40. Of course, the processor 60 and the image sensor 10 may be arranged on different substrates.

The mobile terminal 90 in the embodiments of the present disclosure is adopted with the image sensor 10 including panchromatic pixels and color pixels to achieve phase focusing, such that the phase focusing may be performed by using the panchromatic pixels with high sensitivity in a low-brightness environment (e.g., brightness less than or equal to the first predetermined brightness), by using the color pixels with low sensitivity in a high-brightness environment (e.g., brightness greater than or equal to the second predetermined brightness), and by using at least one of the panchromatic pixels and the color pixels in a moderate brightness environment (e.g., greater than the first predetermined brightness and less than the second predetermined brightness). In this way, the problem of inaccurate focusing due to low signal-to-noise ratio of pixel information output from color pixels may be prevented when using color pixels for phase focusing at low environmental brightness, and the problem of inaccurate focusing due to oversaturation of panchromatic pixels may be prevented when using panchromatic pixels for focusing at high environmental brightness, resulting in a high accuracy of phase focusing in many types of application scenarios and a good scene adaptation of phase focusing.

In the description of this specification, the description with reference to the terms "an embodiment", "some embodiments", "exemplary embodiments", "examples", "specific examples" or "some examples" etc. means that the specific features, structures, materials or characteristics described in connection with said embodiment or example are included in at least one embodiment or example of the present disclosure. In this specification, the schematic representation of the above terms does not necessarily refer to a same embodiment or example. Moreover, the specific features, structures, materials, or characteristics described may be combined in a suitable manner in any one or more embodiments or examples. In addition, without contradicting each other, those skilled in the art may combine the different embodiments or examples described in this specification and the features of the different embodiments or examples.

Any process or method description in the flowchart or otherwise described herein may be understood to represent a module, fragment or portion of code comprising one or more executable instructions for implementing steps of a particular logical function or process, and the scope of the preferred embodiments of the present disclosure includes additional implementations in which the functions may be performed not in the order shown or discussed, including in a substantially simultaneous manner or in the reverse order, depending on the function involved, as should be understood by those skilled in the art to which the embodiments of the present disclosure belong.

Although the embodiments of the present disclosure have been shown and described above, it can be understood that the above embodiments are exemplary and should not be construed as limitations on the present disclosure. Variations, modifications, replacements and variants of the above embodiments can be made by those skilled in the art within the scope of the present disclosure.

## Claims

1. An image sensor, **characterized by** comprising:
a two-dimensional pixel array, comprising a plurality of color pixels and a plurality of panchromatic pixels; wherein each color pixel has a narrower spectral response than each panchromatic pixel; the two-dimensional pixel array comprises a plurality of sub-units, and each sub-unit comprises a plurality of single-color pixels and some of the plurality of panchromatic pixels; and
a lens array, comprising a plurality of lenses; wherein each lens covers a plurality of pixels in at least one of the plurality of sub-units.

2. The image sensor according to claim 1, wherein the two-dimensional pixel array comprises a plurality of smallest repeating units, and each smallest repeating unit comprises some of the plurality of sub-units; in each smallest repeating unit, the plurality of panchromatic pixels are arranged in a first diagonal direction and the plurality of color pixels are arranged in a second diagonal direction, the first diagonal direction being different from the second diagonal direction.

3. The image sensor according to claim 2, wherein a first exposure time of at least adjacent two of the plurality of panchromatic pixels in the first diagonal direction is controlled by a first exposure signal, and a second exposure time of at least adjacent two of the plurality of color pixels in the second diagonal direction is controlled by a second exposure signal.

4. The image sensor according to claim 3, wherein the first exposure time is less than the second exposure time.

5. The image sensor according to claim 4, wherein a ratio of the first exposure time to the second exposure time is one of 1:2, 1:3, or 1:4.

6. The image sensor according to claim 3, further comprising:
a first exposure control line, electrically connected to control terminals of exposure control circuits in the at least adjacent two of the plurality of panchromatic pixels in the first diagonal direction; and
a second exposure control line, electrically connected to control terminals of exposure control circuits in the at least adjacent two of the plurality of color pixels in the second diagonal direction;
wherein the first exposure signal is transmitted through the first exposure control line and the second exposure signal is transmitted through the second exposure control line.

7. The image sensor according to claim 6, wherein,
the first exposure control line is in the shape of "W" and is electrically connected to control terminals of exposure control circuits in the plurality of panchromatic pixels in two adjacent rows;
the second exposure control line is in the shape of "W" and is electrically connected to control terminals of exposure control circuits in the plurality of color pixels in two adjacent rows.

8. The image sensor according to claim 2, wherein the smallest repeating unit is of 4 rows, 4 columns and 16 pixels, and an arrangement thereof is as follows:
W A W B
A W B W
W B W C
B W C W
where W represents one of the plurality of panchromatic pixels;
A represents a first color pixel among the plurality of color pixels;
B represents a second color pixel among the plurality of color pixels;
C represents a third color pixel among the plurality of color pixels.

9. The image sensor according to claim 2, wherein the smallest repeating unit is of 4 rows, 4 columns and 16 pixels, and an arrangement thereof is as follows:
A W B W
W A W B
B W C W
W B W C
where W represents one of the plurality of panchromatic pixels;
A represents a first color pixel among the plurality of color pixels;
B represents a second color pixel among the plurality of color pixels;
C represents a third color pixel among the plurality of color pixels.

10. The image sensor according to claim 8 or 9, wherein,
the first color pixel A is a red pixel R;
the second color pixel B is a green pixel G;
the third color pixel C is a blue pixel Bu.

11. The image sensor according to claim 8 or 9, wherein,
the first color pixel A is a red pixel R;
the second color pixel B is a yellow pixel Y;
the third color pixel C is a blue pixel Bu.

12. The image sensor according to claim 8 or 9, wherein,
the first color pixel A is a magenta pixel M;
the second color pixel B is a cyanide pixel Cy;
the third color pixel C is a yellow pixel Y.

13. The image sensor according to any one of claims 2, 8, and 9, wherein a response band of each panchromatic pixel is a visible light band.

14. The image sensor according to any one of claims 2, 8, and 9, wherein a response band of each panchromatic pixel is a visible and near-infrared band, matching a response band of a photoelectric conversion element in the image sensor.

15. A control method, applied to an image sensor; wherein the image sensor comprises a two-dimensional pixel array and a lens array; the two-dimensional pixel array comprises a plurality of color pixels and a plurality of panchromatic pixels; wherein each color pixel has a narrower spectral response than each panchromatic pixel; the two-dimensional pixel array comprises a plurality of sub-units, and each sub-unit comprises a plurality of single-color pixels and some of the plurality of panchromatic pixels; the lens array comprises a plurality of lenses, and each lens covers a plurality of pixels in at least one of the plurality of sub-units; the method comprises:
outputting panchromatic pixel information by exposing the plurality of panchromatic pixels;
performing focusing by calculating phase difference information according to the panchromatic pixel information; and
in an in-focus state, obtaining a target image by exposing the plurality of pixels in the two-dimensional pixel array.

16. The control method according to claim 15, further comprising:
obtaining an environmental brightness;
the performing focusing by calculating phase difference information according to the panchromatic pixel information comprises:
in response to the environmental brightness being less than a first predetermined brightness, performing focusing by calculating the phase difference information according to the panchromatic pixel information.

17. The control method according to claim 15, further comprising:
outputting color pixel information by exposing the plurality of color pixels; and
performing focusing by calculating the phase difference information according to at least one of the panchromatic pixel information and the color pixel information.

18. The control method according to claim 17, further comprising:
obtaining an environmental brightness;
the performing focusing by calculating the phase difference information according to at least one of the panchromatic pixel information and the color pixel information comprises:
in response to the environmental brightness being greater than a second predetermined brightness, performing focusing by calculating the phase difference information according to the color pixel information; and
in response to the environmental brightness being greater than a first predetermined brightness and less than the second predetermined brightness, performing focusing by calculating the phase difference information according to at least one of the panchromatic pixel information and the color pixel information.

19. A control method, applied to an image sensor; wherein the image sensor comprises a two-dimensional pixel array and a lens array; the two-dimensional pixel array comprises a plurality of color pixels and a plurality of panchromatic pixels; wherein each color pixel has a narrower spectral response than each panchromatic pixel; the two-dimensional pixel array comprises a plurality of sub-units, and each sub-unit comprises a plurality of single-color pixels and some of the plurality of panchromatic pixels; the lens array comprises a plurality of lenses, and each lens covers a plurality of pixels in at least one of the plurality of sub-units; the method comprises:
outputting panchromatic pixel information by exposing the plurality of panchromatic pixels, and outputting color pixel information by exposing the plurality of color pixels;
performing focusing by calculating phase difference information according to the panchromatic pixel information and the color pixel information; and
in an in-focus state, obtaining a target image by exposing the plurality of pixels in the two-dimensional pixel array.

20. The control method according to claim 19, further comprising:
obtaining an environmental brightness;
the performing focusing by calculating phase difference information according to the panchromatic pixel information and the color pixel information comprises:
in response to the environmental brightness being within a predetermined brightness range, performing focusing by calculating the phase difference information according to the panchromatic pixel information and the color pixel information.

21. The control method according to claim 20, further comprising:
in response to the environmental brightness being less than a first predetermined brightness, performing focusing by calculating the phase difference information according to the panchromatic pixel information; and
in response to the environmental brightness being greater than a second predetermined brightness, performing focusing by calculating the phase difference information according to the color pixel information.

22. The control method according to any one of claims 15-18 and 21, wherein the panchromatic pixel information comprises first panchromatic pixel information and second panchromatic pixel information; the first panchromatic pixel information is output by the plurality of panchromatic pixels located in a first orientation of one of the plurality of lenses, and the second panchromatic pixel information is output by the plurality of panchromatic pixels located in a second orientation of the corresponding lens; one of the first panchromatic pixel information and a corresponding second panchromatic pixel information serve as a pair of panchromatic pixel information; the performing focusing by calculating phase difference information according to the panchromatic pixel information comprises:
forming a first curve according to the first panchromatic pixel information in the pairs of panchromatic pixel information;
forming a second curve according to the second panchromatic pixel information in the pairs of panchromatic pixel information; and
performing focusing by calculating the phase difference information according to the first curve and the second curve.

23. The control method according to any one of claims 15-18 and 21, wherein the panchromatic pixel information comprises first panchromatic pixel information and second panchromatic pixel information; the first panchromatic pixel information is output by the plurality of panchromatic pixels located in a first orientation of one of the plurality of lenses, and the second panchromatic pixel information is output by the plurality of panchromatic pixels located in a second orientation of the corresponding lens; a plurality of the first panchromatic pixel information and a corresponding plurality of the second panchromatic pixel information serve as a pair of panchromatic pixel information; the performing focusing by calculating phase difference information according to the panchromatic pixel information comprises:
calculating third panchromatic pixel information according to a plurality of the first panchromatic pixel information in each pair of panchromatic pixel information;
calculating fourth panchromatic pixel information according to a plurality of the second panchromatic pixel information in each pair of panchromatic pixel information;
forming a first curve according to a plurality of the third panchromatic pixel information;
forming a second curve according to a plurality of the fourth panchromatic pixel information; and
performing focusing by calculating the phase difference information according to the first curve and the second curve.

24. The control method according to any one of claims 17, 18 and 21, wherein the color pixel information comprises first color pixel information and second color pixel information; the first color pixel information is output by the plurality of color pixels located in a third orientation of one of the plurality of lenses, and the second color pixel information is output by the plurality of color pixels located in a fourth orientation of the lens; one of the first color pixel information and a corresponding second color pixel information serve as a pair of color pixel information; the performing focusing by calculating the phase difference information according to the color pixel information comprises:
forming a third curve according to the first color pixel information in the pairs of color pixel information;
forming a fourth curve according to the second color pixel information in the pairs of color pixel information; and
performing focusing by calculating the phase difference information according to the third curve and the fourth curve.

25. The control method according to any one of claims 17, 18 and 21, wherein the color pixel information comprises first color pixel information and second color pixel information; the first color pixel information is output by the plurality of color pixels located in a third orientation of one of the plurality of lenses, and the second color pixel information is output by the plurality of color pixels located in a fourth orientation of the lens; a plurality of the first color pixel information and a corresponding plurality of the second color pixel information serve as a pair of color pixel information; the performing focusing by calculating the phase difference information according to the color pixel information comprises:
calculating third color pixel information according to a plurality of the first color pixel information in each pair of color pixel information;
calculating fourth color pixel information according to a plurality of the second color pixel information in each pair of color pixel information;
forming a third curve according to a plurality of the third color pixel information;
forming a fourth curve according to a plurality of the fourth color pixel information; and
performing focusing by calculating the phase difference information according to the third curve and the fourth curve.

26. The control method according to any one of claims 17-21, wherein the panchromatic pixel information comprises first panchromatic pixel information and second panchromatic pixel information, and the color pixel information comprises first color pixel information and second color pixel information; the first panchromatic pixel information is output by the plurality of panchromatic pixels located in a first orientation of one of the plurality of lenses, the second panchromatic pixel information is output by the plurality of panchromatic pixels located in a second orientation of the lens, the first color pixel information is output by the plurality of color pixels located in a third orientation of the lens, and the second color pixel information is output by the plurality of color pixels located in a fourth orientation of the lens; one of the first panchromatic pixel information and a corresponding second panchromatic pixel information serve as a pair of panchromatic pixel information, and one of the first color pixel information and a corresponding second color pixel information serve as a pair of color pixel information; the performing focusing by calculating the phase difference information according to the panchromatic pixel information and the color pixel information comprises:
forming a first curve according to the first panchromatic pixel information in the pairs of panchromatic pixel information;
forming a second curve according to the second panchromatic pixel information in the pairs of panchromatic pixel information;
forming a third curve according to the first color pixel information in the pairs of color pixel information;
forming a fourth curve according to the second color pixel information in the pairs of color pixel information; and
performing focusing by calculating the phase difference information according to the first curve, the second curve, the third curve, and the fourth curve.

27. The control method according to any one of claims 17-21, wherein the panchromatic pixel information comprises first panchromatic pixel information and second panchromatic pixel information, and the color pixel information comprises first color pixel information and second color pixel information; the first panchromatic pixel information is output by the plurality of panchromatic pixels located in a first orientation of one of the plurality of lenses, the second panchromatic pixel information is output by the plurality of panchromatic pixels located in a second orientation of the lens, the first color pixel information is output by the plurality of color pixels located in a third orientation of the lens, and the second color pixel information is output by the plurality of color pixels located in a fourth orientation of the lens; a plurality of the first panchromatic pixel information and a corresponding plurality of the second panchromatic pixel information serve as a pair of panchromatic pixel information, and a plurality of the first color pixel information and a corresponding plurality of the second color pixel information serve as a pair of color pixel information; the performing focusing by calculating the phase difference information according to the panchromatic pixel information and the color pixel information comprises:
calculating third panchromatic pixel information according to a plurality of the first panchromatic pixel information in each pair of panchromatic pixel information;
calculating fourth panchromatic pixel information according to a plurality of the second panchromatic pixel information in each pair of panchromatic pixel information;
calculating third color pixel information according to a plurality of the first color pixel information in each pair of color pixel information;
calculating fourth color pixel information according to a plurality of the second color pixel information in each pair of color pixel information;
forming a first curve according to a plurality of the third panchromatic pixel information;
forming a second curve according to a plurality of the fourth panchromatic pixel information;
forming a third curve according to a plurality of the third color pixel information;
forming a fourth curve according to a plurality of the fourth color pixel information; and
performing focusing by calculating the phase difference information according to the first curve, the second curve, the third curve, and the fourth curve.

28. A camera assembly, comprising the image sensor according to any one of claims 1-14.

29. A camera assembly, comprising: the image sensor according to any one of claims 1-14, wherein the plurality of the panchromatic pixels in the image sensor are exposed to output panchromatic pixel information; and
a processing chip, configured to perform focusing by calculating phase difference information according to the panchromatic pixel information;
wherein in an in-focus state, the plurality of pixels in the two-dimensional pixel array are exposed to obtain a target image.

30. The camera assembly according to claim 29, wherein the processing chip is further configured to perform:
obtaining an environmental brightness; and
in response to the environmental brightness being less than a first predetermined brightness, performing focusing by calculating the phase difference information according to the panchromatic pixel information.

31. The camera assembly according to claim 29, wherein the plurality of color pixels in the image sensor are exposed to output color pixel information;
the processing chip is further configured to perform focusing by calculating the phase difference information according to at least one of the panchromatic pixel information and the color pixel information

32. The camera assembly according to claim 31, wherein the processing chip is further configured to perform:
obtaining an environmental brightness;
in response to the environmental brightness being greater than a second predetermined brightness, performing focusing by calculating the phase difference information according to the color pixel information; and
in response to the environmental brightness being greater than a first predetermined brightness and less than the second predetermined brightness, performing focusing by calculating the phase difference information according to at least one of the panchromatic pixel information and the color pixel information.

33. A camera assembly, comprising:
the image sensor according to any one of claims 1-14, wherein the plurality of panchromatic pixels in the image sensor are exposed to output panchromatic pixel information, and the plurality of color pixels in the image sensor are exposed to output color pixel information; and
a processing chip, configured to perform focusing by calculating phase difference information according to the panchromatic pixel information and the color pixel information;
wherein in an in-focus state, the plurality of pixels in the two-dimensional pixel array are exposed to obtain a target image.

34. The camera assembly according to claim 33, wherein the processing chip is further configured to perform:
obtaining an environmental brightness;
in response to the environmental brightness being within a predetermined brightness range, performing focusing by calculating the phase difference information according to the panchromatic pixel information and the color pixel information.

35. The camera assembly according to claim 33, wherein the processing chip is further configured to perform:
in response to the environmental brightness being less than a first predetermined brightness, performing focusing by calculating the phase difference information according to the panchromatic pixel information; and
in response to the environmental brightness being greater than a second predetermined brightness, performing focusing by calculating the phase difference information according to the color pixel information.

36. The camera assembly according to any one of claims 29-32, and 35, wherein the panchromatic pixel information comprises first panchromatic pixel information and second panchromatic pixel information; the first panchromatic pixel information is output by the plurality of panchromatic pixels located in a first orientation of one of the plurality of lenses, and the second panchromatic pixel information is output by the plurality of panchromatic pixels located in a second orientation of the corresponding lens; one of the first panchromatic pixel information and a corresponding second panchromatic pixel information serve as a pair of panchromatic pixel information; the processing chip is further configured to perform:
forming a first curve according to the first panchromatic pixel information in the pairs of panchromatic pixel information;
forming a second curve according to the second panchromatic pixel information in the pairs of panchromatic pixel information; and
performing focusing by calculating the phase difference information according to the first curve and the second curve.

37. The camera assembly according to any one of claims 29-32, and 35, wherein the panchromatic pixel information comprises first panchromatic pixel information and second panchromatic pixel information; the first panchromatic pixel information is output by the plurality of panchromatic pixels located in a first orientation of one of the plurality of lenses, and the second panchromatic pixel information is output by the plurality of panchromatic pixels located in a second orientation of the corresponding lens; a plurality of the first panchromatic pixel information and a corresponding plurality of the second panchromatic pixel information serve as a pair of panchromatic pixel information; the processing chip is further configured to perform:
calculating third panchromatic pixel information according to a plurality of the first panchromatic pixel information in each pair of panchromatic pixel information;
calculating fourth panchromatic pixel information according to a plurality of the second panchromatic pixel information in each pair of panchromatic pixel information;
forming a first curve according to a plurality of the third panchromatic pixel information;
forming a second curve according to a plurality of the fourth panchromatic pixel information; and
performing focusing by calculating the phase difference information according to the first curve and the second curve.

38. The camera assembly according to any one of claims 31, 32 and 35, wherein the color pixel information comprises first color pixel information and second color pixel information; the first color pixel information is output by the plurality of color pixels located in a third orientation of one of the plurality of lenses, and the second color pixel information is output by the plurality of color pixels located in a fourth orientation of the lens; one of the first color pixel information and a corresponding second color pixel information serve as a pair of color pixel information; the processing chip is further configured to perform:
forming a third curve according to the first color pixel information in the pairs of color pixel information;
forming a fourth curve according to the second color pixel information in the pairs of color pixel information; and
performing focusing by calculating the phase difference information according to the third curve and the fourth curve.

39. The camera assembly according to any one of claims 31, 32 and 35, wherein the color pixel information comprises first color pixel information and second color pixel information; the first color pixel information is output by the plurality of color pixels located in a third orientation of one of the plurality of lenses, and the second color pixel information is output by the plurality of color pixels located in a fourth orientation of the lens; a plurality of the first color pixel information and a corresponding plurality of the second color pixel information serve as a pair of color pixel information; the processing chip is further configured to perform:
calculating third color pixel information according to a plurality of the first color pixel information in each pair of color pixel information;
calculating fourth color pixel information according to a plurality of the second color pixel information in each pair of color pixel information;
forming a third curve according to a plurality of the third color pixel information;
forming a fourth curve according to a plurality of the fourth color pixel information; and
performing focusing by calculating the phase difference information according to the third curve and the fourth curve.

40. The camera assembly according to any one of claims 31-35, wherein the panchromatic pixel information comprises first panchromatic pixel information and second panchromatic pixel information, and the color pixel information comprises first color pixel information and second color pixel information; the first panchromatic pixel information is output by the plurality of panchromatic pixels located in a first orientation of one of the plurality of lenses, the second panchromatic pixel information is output by the plurality of panchromatic pixels located in a second orientation of the lens, the first color pixel information is output by the plurality of color pixels located in a third orientation of the lens, and the second color pixel information is output by the plurality of color pixels located in a fourth orientation of the lens; one of the first panchromatic pixel information and a corresponding second panchromatic pixel information serve as a pair of panchromatic pixel information, and one of the first color pixel information and a corresponding second color pixel information serve as a pair of color pixel information; the processing chip is further configured to perform:
forming a first curve according to the first panchromatic pixel information in the pairs of panchromatic pixel information;
forming a second curve according to the second panchromatic pixel information in the pairs of panchromatic pixel information;
forming a third curve according to the first color pixel information in the pairs of color pixel information;
forming a fourth curve according to the second color pixel information in the pairs of color pixel information; and
performing focusing by calculating the phase difference information according to the first curve, the second curve, the third curve, and the fourth curve.

41. The camera assembly according to any one of claims 31-35, wherein the panchromatic pixel information comprises first panchromatic pixel information and second panchromatic pixel information, and the color pixel information comprises first color pixel information and second color pixel information; the first panchromatic pixel information is output by the plurality of panchromatic pixels located in a first orientation of one of the plurality of lenses, the second panchromatic pixel information is output by the plurality of panchromatic pixels located in a second orientation of the lens, the first color pixel information is output by the plurality of color pixels located in a third orientation of the lens, and the second color pixel information is output by the plurality of color pixels located in a fourth orientation of the lens; a plurality of the first panchromatic pixel information and a corresponding plurality of the second panchromatic pixel information serve as a pair of panchromatic pixel information, and a plurality of the first color pixel information and a corresponding plurality of the second color pixel information serve as a pair of color pixel information; the processing chip is further configured to perform:
calculating third panchromatic pixel information according to a plurality of the first panchromatic pixel information in each pair of panchromatic pixel information;
calculating fourth panchromatic pixel information according to a plurality of the second panchromatic pixel information in each pair of panchromatic pixel information;
calculating third color pixel information according to a plurality of the first color pixel information in each pair of color pixel information;
calculating fourth color pixel information according to a plurality of the second color pixel information in each pair of color pixel information;
forming a first curve according to a plurality of the third panchromatic pixel information;
forming a second curve according to a plurality of the fourth panchromatic pixel information;
forming a third curve according to a plurality of the third color pixel information;
forming a fourth curve according to a plurality of the fourth color pixel information; and
performing focusing by calculating the phase difference information according to the first curve, the second curve, the third curve, and the fourth curve.

42. A mobile terminal, comprising:
a casing; and
the image sensor according to any one of claims 1-14, arranged in the casing.

43. A mobile terminal, comprising:
the image sensor according to any one of claims 1-14, wherein the plurality of the panchromatic pixels in the image sensor are exposed to output panchromatic pixel information; and
a processor, configured to perform focusing by calculating phase difference information according to the panchromatic pixel information;
wherein in an in-focus state, the plurality of pixels in the two-dimensional pixel array are exposed to obtain a target image.

44. The mobile terminal according to claim 43, wherein the processor is further configured to perform:
obtaining an environmental brightness; and
in response to the environmental brightness being less than a first predetermined brightness, performing focusing by calculating the phase difference information according to the panchromatic pixel information.

45. The mobile terminal according to claim 43, wherein the plurality of color pixels in the image sensor are exposed to output color pixel information;
the processor is further configured to perform focusing by calculating the phase difference information according to at least one of the panchromatic pixel information and the color pixel information

46. The mobile terminal according to claim 45, wherein the processor is further configured to perform:
obtaining an environmental brightness;
in response to the environmental brightness being greater than a second predetermined brightness, performing focusing by calculating the phase difference information according to the color pixel information; and
in response to the environmental brightness being greater than a first predetermined brightness and less than the second predetermined brightness, performing focusing by calculating the phase difference information according to at least one of the panchromatic pixel information and the color pixel information.

47. A mobile terminal, comprising:
the image sensor according to any one of claims 1-14, wherein the plurality of panchromatic pixels in the image sensor are exposed to output panchromatic pixel information, and the plurality of color pixels in the image sensor are exposed to output color pixel information; and
a processor, configured to perform focusing by calculating phase difference information according to the panchromatic pixel information and the color pixel information;
wherein in an in-focus state, the plurality of pixels in the two-dimensional pixel array are exposed to obtain a target image.

48. The mobile terminal according to claim 47, wherein the processor is further configured to perform:
obtaining an environmental brightness;
in response to the environmental brightness being within a predetermined brightness range, performing focusing by calculating the phase difference information according to the panchromatic pixel information and the color pixel information.

49. The mobile terminal according to claim 48, wherein the processor is further configured to perform:
in response to the environmental brightness being less than a first predetermined brightness, performing focusing by calculating the phase difference information according to the panchromatic pixel information; and
in response to the environmental brightness being greater than a second predetermined brightness, performing focusing by calculating the phase difference information according to the color pixel information.

50. The mobile terminal according to any one of claims 43-46, and 49, wherein the panchromatic pixel information comprises first panchromatic pixel information and second panchromatic pixel information; the first panchromatic pixel information is output by the plurality of panchromatic pixels located in a first orientation of one of the plurality of lenses, and the second panchromatic pixel information is output by the plurality of panchromatic pixels located in a second orientation of the corresponding lens; one of the first panchromatic pixel information and a corresponding second panchromatic pixel information serve as a pair of panchromatic pixel information; the processor is further configured to perform:
forming a first curve according to the first panchromatic pixel information in the pairs of panchromatic pixel information;
forming a second curve according to the second panchromatic pixel information in the pairs of panchromatic pixel information; and
performing focusing by calculating the phase difference information according to the first curve and the second curve.

51. The mobile terminal according to any one of claims 43-46, and 49, wherein the panchromatic pixel information comprises first panchromatic pixel information and second panchromatic pixel information; the first panchromatic pixel information is output by the plurality of panchromatic pixels located in a first orientation of one of the plurality of lenses, and the second panchromatic pixel information is output by the plurality of panchromatic pixels located in a second orientation of the corresponding lens; a plurality of the first panchromatic pixel information and a corresponding plurality of the second panchromatic pixel information serve as a pair of panchromatic pixel information; the processor is further configured to perform:
calculating third panchromatic pixel information according to a plurality of the first panchromatic pixel information in each pair of panchromatic pixel information;
calculating fourth panchromatic pixel information according to a plurality of the second panchromatic pixel information in each pair of panchromatic pixel information;
forming a first curve according to a plurality of the third panchromatic pixel information;
forming a second curve according to a plurality of the fourth panchromatic pixel information; and
performing focusing by calculating the phase difference information according to the first curve and the second curve.

52. The mobile terminal according to any one of claims 45, 46 and 49, wherein the color pixel information comprises first color pixel information and second color pixel information; the first color pixel information is output by the plurality of color pixels located in a third orientation of one of the plurality of lenses, and the second color pixel information is output by the plurality of color pixels located in a fourth orientation of the lens; one of the first color pixel information and a corresponding second color pixel information serve as a pair of color pixel information; the processor is further configured to perform:
forming a third curve according to the first color pixel information in the pairs of color pixel information;
forming a fourth curve according to the second color pixel information in the pairs of color pixel information; and
performing focusing by calculating the phase difference information according to the third curve and the fourth curve.

53. The mobile terminal according to any one of claims 45, 46 and 49, wherein the color pixel information comprises first color pixel information and second color pixel information; the first color pixel information is output by the plurality of color pixels located in a third orientation of one of the plurality of lenses, and the second color pixel information is output by the plurality of color pixels located in a fourth orientation of the lens; a plurality of the first color pixel information and a corresponding plurality of the second color pixel information serve as a pair of color pixel information; the processor is further configured to perform:
calculating third color pixel information according to a plurality of the first color pixel information in each pair of color pixel information;
calculating fourth color pixel information according to a plurality of the second color pixel information in each pair of color pixel information;
forming a third curve according to a plurality of the third color pixel information;
forming a fourth curve according to a plurality of the fourth color pixel information; and
performing focusing by calculating the phase difference information according to the third curve and the fourth curve.

54. The mobile terminal according to any one of claims 45-49, wherein the panchromatic pixel information comprises first panchromatic pixel information and second panchromatic pixel information, and the color pixel information comprises first color pixel information and second color pixel information; the first panchromatic pixel information is output by the plurality of panchromatic pixels located in a first orientation of one of the plurality of lenses, the second panchromatic pixel information is output by the plurality of panchromatic pixels located in a second orientation of the lens, the first color pixel information is output by the plurality of color pixels located in a third orientation of the lens, and the second color pixel information is output by the plurality of color pixels located in a fourth orientation of the lens; one of the first panchromatic pixel information and a corresponding second panchromatic pixel information serve as a pair of panchromatic pixel information, and one of the first color pixel information and a corresponding second color pixel information serve as a pair of color pixel information; the processor is further configured to perform:
forming a first curve according to the first panchromatic pixel information in the pairs of panchromatic pixel information;
forming a second curve according to the second panchromatic pixel information in the pairs of panchromatic pixel information;
forming a third curve according to the first color pixel information in the pairs of color pixel information;
forming a fourth curve according to the second color pixel information in the pairs of color pixel information; and
performing focusing by calculating the phase difference information according to the first curve, the second curve, the third curve, and the fourth curve.

55. The mobile terminal according to any one of claims 45-49, wherein the panchromatic pixel information comprises first panchromatic pixel information and second panchromatic pixel information, and the color pixel information comprises first color pixel information and second color pixel information; the first panchromatic pixel information is output by the plurality of panchromatic pixels located in a first orientation of one of the plurality of lenses, the second panchromatic pixel information is output by the plurality of panchromatic pixels located in a second orientation of the lens, the first color pixel information is output by the plurality of color pixels located in a third orientation of the lens, and the second color pixel information is output by the plurality of color pixels located in a fourth orientation of the lens; a plurality of the first panchromatic pixel information and a corresponding plurality of the second panchromatic pixel information serve as a pair of panchromatic pixel information, and a plurality of the first color pixel information and a corresponding plurality of the second color pixel information serve as a pair of color pixel information; the processor is further configured to perform:
calculating third panchromatic pixel information according to a plurality of the first panchromatic pixel information in each pair of panchromatic pixel information;
calculating fourth panchromatic pixel information according to a plurality of the second panchromatic pixel information in each pair of panchromatic pixel information;
calculating third color pixel information according to a plurality of the first color pixel information in each pair of color pixel information;
calculating fourth color pixel information according to a plurality of the second color pixel information in each pair of color pixel information;
forming a first curve according to a plurality of the third panchromatic pixel information;
forming a second curve according to a plurality of the fourth panchromatic pixel information;
forming a third curve according to a plurality of the third color pixel information;
forming a fourth curve according to a plurality of the fourth color pixel information; and
performing focusing by calculating the phase difference information according to the first curve, the second curve, the third curve, and the fourth curve.
